(19) Europäisches Patentamt European Patent Office Office européen des brevets

(11) **EP 3 509 257 B1**

(12) **EUROPEAN PATENT SPECIFICATION**

(45) Date of publication and mention of the grant of the patent:
**17.11.2021 Bulletin 2021/46**

(21) Application number: **17844906.2**

(22) Date of filing: **27.04.2017**

(51) Int Cl.:
**H04L 25/03** *(2006.01)*    **H04B 10/61** *(2013.01)*

(86) International application number:
**PCT/CN2017/082267**

(87) International publication number:
**WO 2018/040598 (08.03.2018 Gazette 2018/10)**

(54) **TAP COEFFICIENT ADJUSTMENT METHOD AND DEVICE, AND COMPUTER STORAGE MEDIUM**

VERFAHREN UND VORRICHTUNG ZUR TAP-KOEFFIZIENTEN-ANPASSUNG SOWIE COMPUTERSPEICHERMEDIUM

PROCÉDÉ ET DISPOSITIF DE RÉGLAGE DE COEFFICIENTS DE PRISE, ET SUPPORT DE STOCKAGE INFORMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.09.2016 CN 201610802965**

(43) Date of publication of application:
**10.07.2019 Bulletin 2019/28**

(73) Proprietor: **Sanechips Technology Co., Ltd. Shenzhen, Guangdong 518055 (CN)**

(72) Inventor: **LIU, Lei Shenzhen Guangdong 518055 (CN)**

(74) Representative: **Regimbeau 20, rue de Chazelles 75847 Paris Cedex 17 (FR)**

(56) References cited:
**EP-A2- 1 111 837      CN-A- 101 361 335
CN-A- 105 262 707    CN-A- 105 281 792
CN-A- 106 330 320    US-A1- 2012 134 684
US-B1- 8 705 977**

• **YECAI GUO ET AL: "Moving equalizer taps based constant modulus blind equalization algorithm", SIGNAL PROCESSING, THE 8TH INTERNATIONAL CONFERENCE ON, IEEE, PI, 1 January 2006 (2006-01-01), XP031058503, ISBN: 978-0-7803-9736-1**

## Description

### TECHNICAL FIELD

The present invention relates to the field of high speed optical transmission and, in particular, to a tap coefficient adjustment method and device, and a computer storage medium.

### BACKGROUND

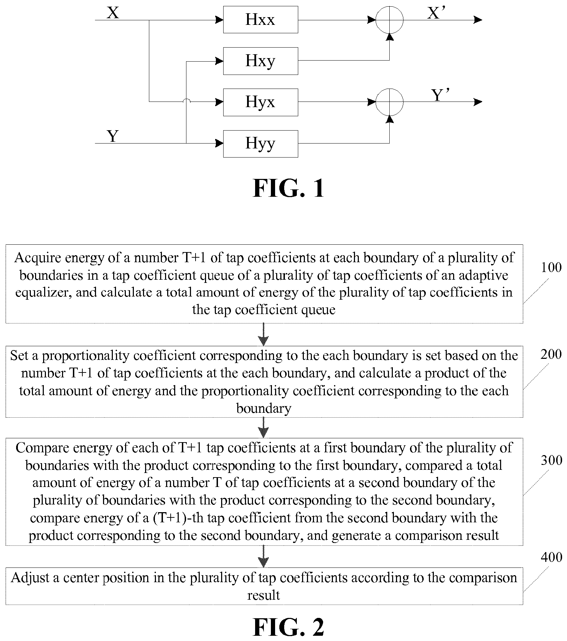

In the high speed optical transmission system, waveform distortion correction and adaptive equalization are performed by a digital signal processing circuit in a digital coherent receiver to correct waveform distortion and compensate for various impairments in an optical channel by adaptively tracking channel characteristics. In the digital coherent receiver, the adaptive equalization function is implemented by an adaptive equalizer. One component of the adaptive equalizer is the filter shown in FIG. 1. Adaptive convergence of tap coefficients plays a key role in a stable operation of the adaptive equalizer. However, time-varying channel impairments may cause the tap coefficients of the filter to deviate from the center position to the boundaries or even out of the boundaries. Therefore, the system error rate increase sharply and even the adaptive equalizer needs to preform convergence again. The tap coefficients of the adaptive equalizer cannot be effectively controlled and the high speed optical transmission system unstably operates.

When the tap coefficients of the adaptive equalizer are managed, the energy of the tap coefficients may be compared to find a position index value corresponding to the tap coefficient with the largest energy, and whether the position index value is located in the center region of the tap coefficients is determined to adjust the position of the tap coefficients leftward or rightward.

Though the method can adjust the tap coefficient with the largest energy of the adaptive equalizer to the center position in the tap coefficients, there are a risk of moving the tap coefficient with the second largest energy or below out of the tap position and a risk that the tap coefficient with the second largest energy or below recurs at the boundaries after adjustment. Once the above risks occur, the filter performance of the adaptive equalizer decreases, and even the filter performance after the center position in the tap coefficients is adjusted is inferior to the filtering performance before the adjustment. The article by Yecai Guo et al, 1 January 2006, "Moving equalizer taps based constant modulus blind equalization algorithm", ICSP 2006, discloses such a prior-art method.

Therefore, the decrease of the filter performance caused by adjusting the center position in the tap coefficients of the adaptive equalizer is an urgent problem to be solved.

## SUMMARY

Embodiments of the present invention desire to provide a tap coefficient adjustment method and device, and a computer storage medium which may ensure stable filter performance at the time of adjusting a center position in tap coefficients of an adaptive equalizer.

To achieve the preceding object, technical solutions in the embodiments of the present invention are implemented as follows.

The present invention provides a tap coefficient adjustment method. The adjustment includes: acquiring energy of a number $T+1$ of tap coefficients at each boundary of a plurality of boundaries in a tap coefficient queue of a plurality of tap coefficients of an adaptive equalizer, and calculating a total amount of energy of the plurality of tap coefficients in the tap coefficient queue, where $T$ is a preset adjustment step size of the plurality of tap coefficients of the adaptive equalizer and $T$ is a positive integer; setting a proportionality coefficient corresponding to each boundary based on the number $T+1$ of tap coefficients at each boundary, and calculating a product of the total amount of energy and the proportionality coefficient corresponding to each boundary; comparing energy of each of $T+1$ tap coefficients at a first boundary of the plurality of boundaries with the product corresponding to the first boundary, comparing a total amount of energy of a number $T$ of tap coefficients at a second boundary of the plurality of boundaries with the product corresponding to the second boundary, comparing energy of a $(T+1)$-th tap coefficient from the second boundary with the product corresponding to the second boundary, and generating a comparison result; and adjusting a center position in the plurality of tap coefficients according to the comparison result.

In an embodiment, the proportionality coefficient includes a first proportionality coefficient, a second proportionality coefficient, a third proportionality coefficient and a fourth proportionality coefficient; the product includes a first product of the total amount of energy and the first proportionality coefficient, a second product of the total amount of energy and the second proportionality coefficient, a third product of the total amount of energy and the third proportionality coefficient, and a fourth product of the total amount of energy and the fourth proportionality coefficient. The step of adjusting the center position in the plurality of tap coefficients according to the comparison result includes: determining that energy of at least one of $T$ successive tap coefficients starting from a first tap coefficient at the first boundary is greater than the first product or energy of a $(T+1)$-th tap coefficient at the first boundary is greater than the fourth product; determining that a total amount of energy of $T$ successive tap coefficients starting from an $(N+1-T)$-th tap coefficient at the second boundary is less than the second product and energy of an $(N-T)$-th tap coefficient at the second boundary is less than the third product, where $N$ is a number of tap coefficients in the tap coefficient queue;

and adjusting the center position in the plurality of the tap coefficients.

In an embodiment, the step of adjusting the center position in the plurality of tap coefficients includes moving the T tap coefficients at the second boundary to the first boundary of the tap coefficient queue.

In an embodiment, the proportionality coefficient includes a first proportionality coefficient, a second proportionality coefficient, a third proportionality coefficient and a fourth proportionality coefficient; the product includes a first product of the total amount of energy and the first proportionality coefficient, a second product of the total amount of energy and the second proportionality coefficient, a third product of the total amount of energy and the third proportionality coefficient, and a fourth product of the total amount of energy and the fourth proportionality coefficient. The step of djusting the center position in the plurality of tap coefficients according to the comparison result includes: determining that energy of at least one of T successive tap coefficients starting from an (N+1-T)-th tap coefficient at the second boundary is greater than the first product, or energy of an (N-T)-th tap coefficient at the second boundary is greater than the fourth product; determining that a total amount of energy of T successive tap coefficients starting from a first tap coefficient at the first boundary is less than the second product, and energy of a (T+1)-th tap coefficient at the first boundary is less than the third product, where N is a number of tap coefficients in the tap coefficient queue; and adjusting the center position in the plurality of the tap coefficients.

In an embodiment, the step of adjusting the center position in the plurality of tap coefficients includes moving the T tap coefficients at the first boundary to the second boundary of the tap coefficient queue.

In an embodiment, the proportionality coefficient includes a first proportionality coefficient, a second proportionality coefficient, a third proportionality coefficient and a fourth proportionality coefficient; the product includes a first product of the total amount of energy and the first proportionality coefficient, a second product of the total amount of energy and the second proportionality coefficient, a third product of the total amount of energy and the third proportionality coefficient, and a fourth product of the total amount of energy and the fourth proportionality coefficient. The method further includes: determining that energy of at least one of T successive tap coefficients starting from a first tap coefficient at the first boundary is greater than the first product or energy of a (T+1)-th tap coefficient at the first boundary is greater than the fourth product; or that energy of at least one of T successive tap coefficients starting from an (N+1-T)-th tap coefficient at the second boundary is greater than the first product or energy of an (N-T)-th tap coefficient at the second boundary is greater than the fourth product. In a case of determining that energy of at least one of T successive tap coefficients starting from the first tap coefficient at the first boundary is greater than the first product or energy of the (T+1)-th tap coefficient at the first boundary is greater than the fourth product, the method further includes: determining that a total amount of energy of the T successive tap coefficients starting from the (N+1-T)-th tap coefficient at the second boundary is less than the second product and the energy of the (N-T)-th tap coefficient at the second boundary is less than the third product, where N is a number of tap coefficients in the tap coefficient queue; and moving the T tap coefficients at the second boundary to the first boundary of the tap coefficient queue. In a case of determining that energy of at least one of T successive tap coefficients starting from the (N+1-T)-th tap coefficient at the second boundary is greater than the first product or energy of the (N-T)-th tap coefficient at the second boundary is greater than the fourth product, the method further includes: determining that a total amount of energy of the T successive tap coefficients starting from the first tap coefficient at the first boundary is less than the second product and the energy of the (T+1)-th tap coefficient at the first boundary is less than the third product, where N is the number of tap coefficients in the tap coefficient queue; and moving the T tap coefficients at the first boundary to the second boundary of the tap coefficient queue.

In an embodiment, the method further includes: in response to determining that the adaptive equalizer enters a convergence state, setting the first proportionality coefficient to a first value, where the first value is greater than an initial value of the first proportional coefficient; setting the second proportionality coefficient to a second value, where the second value is greater than an initial value of the second proportional coefficient; setting the third proportionality coefficient to a third value, where the third value is greater than an initial value of the third proportional coefficient; and setting the fourth proportionality coefficient to a fourth value, where the fourth value is greater than an initial value of the fourth proportional coefficient.

The present invention provides a tap coefficient adjustment device. The device includes an acquisition module, an energy proportionality calculation module, a comparison module, and an adjustment module. The acquisition module is configured to acquire energy of a number T+1 of tap coefficients at each boundary of a plurality of boundaries in a tap coefficient queue of a plurality of tap coefficients of an adaptive equalizer, and calculate a total amount of energy of the plurality of tap coefficients in the tap coefficient queue, where T is a preset adjustment step size of the plurality of tap coefficients of the adaptive equalizer and T is a positive integer. The energy proportionality calculation module is configured to set a proportionality coefficient corresponding to each boundary based on the number T+1 of tap coefficients at each boundary, and calculate a product of the total amount of energy and the proportionality coefficient corresponding to each boundary. The comparison module is configured to compare energy of each of T+1 tap coefficients at a first boundary of the plurality of boundaries with the product corresponding to the first boundary, compare a total amount of energy of a number T of tap coefficients at a second boundary of the plurality of boundaries with the product corresponding to the second boundary, compare energy of a (T+1)-th tap coefficient from the second boundary with the product corresponding to the second boundary, and generate a comparison result. The adjustment module is configured to adjust a center position in the plurality of tap coefficients according to the comparison result.

In an embodiment, the proportionality coefficient includes a first proportionality coefficient, a second proportionality coefficient, a third proportionality coefficient and a fourth proportionality coefficient; the product includes a first product of the total amount of energy and the first proportionality coefficient, a second product of the total amount of energy and the second proportionality coefficient, a third product of the total amount of energy and the third proportionality coefficient, and a fourth product of the total amount of energy and the fourth proportionality coefficient. The adjustment module is configured to: determine that energy of at least one of T successive tap coefficients starting from a first tap coefficient at the first boundary is greater than the first product or energy of a (T+1)-th tap coefficient at the first boundary is greater than the fourth product; determine that a total amount of energy of T successive tap coefficients starting from an (N+1-T)-th tap coefficient at the second boundary is less than the second product and energy of an (N-T)-th tap coefficient at the second boundary is less than the third product, where N is a number of tap coefficients in the tap coefficient queue; and adjust the center position in the plurality of the tap coefficients.

In an embodiment, the adjustment of the center position in the plurality of tap coefficients includes to move the T tap coefficients at the second boundary to the first boundary of the tap coefficient queue.

In an embodiment, the proportionality coefficient includes a first proportionality coefficient, a second proportionality coefficient, a third proportionality coefficient and a fourth proportionality coefficient; the product includes a first product of the total amount of energy and the first proportionality coefficient, a second product of the total amount of energy and the second proportionality coefficient, a third product of the total amount of energy and the third proportionality coefficient, and a fourth product of the total amount of energy and the fourth proportionality coefficient. The adjustment module is configured to: determine that energy of at least one of T successive tap coefficients starting from an (N+1-T)-th tap coefficient at the second boundary is greater than the first product, or energy of an (N-T)-th tap coefficient at the second boundary is greater than the fourth product; determine that a total amount of energy of T successive tap coefficients starting from a first tap coefficient at the first boundary is less than the second product, and energy of a (T+1)-th tap coefficient at the first boundary is less than the third product, where N is a number of tap coefficients in the tap coefficient queue; and adjust the center position in the plurality of the tap coefficients.

In an embodiment, the adjustment of the center position in the plurality of tap coefficients includes to move the T tap coefficients at the first boundary to the second boundary of the tap coefficient queue.

In an embodiment, the proportionality coefficient includes a first proportionality coefficient, a second proportionality coefficient, a third proportionality coefficient and a fourth proportionality coefficient; the product includes a first product of the total amount of energy and the first proportionality coefficient, a second product of the total amount of energy and the second proportionality coefficient, a third product of the total amount of energy and the third proportionality coefficient, and a fourth product of the total amount of energy and the fourth proportionality coefficient. The adjustment module is configured to: determine that energy of at least one of T successive tap coefficients starting from a first tap coefficient at the first boundary is greater than the first product or energy of a (T+1)-th tap coefficient at the first boundary is greater than the fourth product; or that energy of at least one of T successive tap coefficients starting from an (N+1-T)-th tap coefficient at the second boundary is greater than the first product or energy of an (N-T)-th tap coefficient at the second boundary is greater than the fourth product. In a case of determining that energy of at least one of T successive tap coefficients starting from the first tap coefficient at the first boundary is greater than the first product or energy of the (T+1)-th tap coefficient at the first boundary is greater than the fourth product, the adjustment module is further configured to: determine that a total amount of energy of the T successive tap coefficients starting from the (N+1-T)-th tap coefficient at the second boundary is less than the second product and the energy of the (N-T)-th tap coefficient at the second boundary is less than the third product, where N is a number of tap coefficients in the tap coefficient queue; and move the T tap coefficients at the second boundary to the first boundary of the tap coefficient queue. In a case of determining that energy of at least one of T successive tap coefficients starting from the (N+1-T)-th tap coefficient at the second boundary is greater than the first product or energy of the (N-T)-th tap coefficient at the second boundary is greater than the fourth product, the adjustment module is further configured to: determine that a total amount of energy of the T successive tap coefficients starting from the first tap coefficient at the first boundary is less than the second product and the energy of the (T+1)-th tap coefficient at the first boundary is less than the third product, where N is the number of tap coefficients in the tap coefficient queue; and move the T tap coefficients at the first boundary to the second boundary of the tap coefficient queue.

In an embodiment, the energy proportionality calculation module is further configured to: in response to determining that the adaptive equalizer enters a convergence state, set the first proportionality coefficient to a first value, where the first value is greater than an initial value of the first proportional coefficient; set the second proportionality coefficient to a second value, where the second value is greater than an initial value of the second proportional coefficient; set the third proportionality coefficient to a third value, where the third value is greater than an initial value of the third proportional coefficient; and set the fourth proportionality coefficient to a fourth value, where the fourth value is greater than an initial value of the fourth proportional coefficient.

The present invention further provides a computer storage medium, which is configured to store computer-executable instructions for executing the tap coefficient adjustment method according to the embodiment of the present invention.

In the tap coefficient adjustment method and device and the computer storage medium provided by the embodiments of the present invention, the energy of the T+1 tap coefficients at each boundary in the tap coefficient queue of the plurality of tap coefficients of the adaptive equalizer is acquired; the proportionality coefficient corresponding to each boundary is set based on the T+1 tap coefficients at each boundary, and the product of the total amount of energy and the proportionality coefficient corresponding to each boundary is calculated; the energy of each of the T+1 tap coefficients at the first boundary is compared with the product corresponding to the first boundary, the total amount of energy of the T tap coefficients at the second boundary is compared with the product corresponding to the second boundary, the energy of the (T+1)-th tap coefficient from the second boundary is compared with the product corresponding to the second boundary, and the comparison result is generated; and the center position in the plurality of tap coefficients is adjusted according to the comparison result. The solutions may not only move the tap coefficient with greater energy to a more central position of the plurality of tap coefficients but also avoid a case where filter performance losses are caused by moving other tap coefficients with greater energy out of the positions of the plurality of coefficients in a movement process and a case where filter performance is not improved because the other tap coefficients with greater energy recur at the boundaries after the movement process. Compared with the existing art, stable filter performance may be ensured while the center position of the adaptive equalizer is adjusted.

## BRIEF DESCRIPTION OF DRAWINGS

FIG. 1 is a structural diagram of a filter in an adaptive equalizer in the existing art;

FIG. 2 is a flowchart of a tap coefficient adjustment method in an embodiment 1 of the present invention;

FIG. 3 is a flowchart of a method for adjusting a center position in tap coefficients in the embodiment 1 of the present invention;

FIG. 4 is a flowchart of a method for adjusting a center position in tap coefficients in an embodiment 2 of the present invention;

FIG. 5 is a flowchart of a method for adjusting a center position in tap coefficients in an embodiment 3 of the present invention;

FIG. 6 is a flowchart of a method for adjusting a center position in tap coefficients in an embodiment 4 of the present invention; and

FIG. 7 is a structural diagram of a tap coefficient adjustment device according to an embodiment 5 of the present invention.

## DETAILED DESCRIPTION

To provide a more detailed understanding of features and content of embodiments of the present invention, implementation of the embodiments of the present invention is described below in detail with reference to the drawings. The drawings are provided for reference only and are not intended to limit the embodiments of the present invention.

Embodiment 1

FIG. 2 is a flowchart of a tap coefficient adjustment method in an embodiment of the present invention. As shown in FIG. 2, the adjustment method provided by the embodiment of the present invention includes the steps described below.

In step 100, energy of a number T+1 of tap coefficients at each boundary of a plurality of boundaries in a tap coefficient queue of a plurality of tap coefficients of an adaptive equalizer is acquired, and a total amount of energy of the plurality of tap coefficients in the tap coefficient queue is calculated, where T is a preset adjustment step size of the plurality of tap coefficients of the adaptive equalizer and T is a positive integer.

In step 200, a proportionality coefficient corresponding to each boundary is set based on the number T+1 of tap coefficients at each boundary, and a product of the total amount of energy and the proportionality coefficient corresponding to each boundary is calculated.

In step 300, energy of each of T+1 tap coefficients at a first boundary of the plurality of boundaries is compared with the product corresponding to the first boundary, a total amount of energy of a number T of tap coefficients at a second boundary of the plurality of boundaries is compared with the product corresponding to the second boundary, energy of a (T+1)-th tap coefficient from the second boundary is compared with the product corresponding to the second boundary, and a comparison result is generated.

In step 400, a center position in the plurality of tap coefficients is adjusted according to the comparison result.

The operation in step 400 is preformed to enable tap coefficients with greater energy to move to a more central position in the plurality of tap coefficients, which may enhance stability of a high-speed optical transmission system.

In step 100 in the embodiment of the present invention, the step of acquiring energy of each tap coefficient at each boundary and calculating the total amount of energy of the plurality of tap coefficients specifically includes the step described below.

In the embodiment of the present invention, only energy in an x direction is calculated for each tap coefficient. In a filter shown in FIG. 1, in the x direction of each tap coefficient, energy $h1(n)$ of a dominant term is a sum of a real part squared and an imaginary part squared of the dominant term, written as:

$h1(n)= (real(Hxx(n)))^2 + (imag(Hxx(n)))^2$, where $n \geq 1$, n is less than or equal to N, and N is a number of tap coefficients in the tap coefficient queue. In the embodiments of the present invention, real represents the real part, imag represents the imaginary part, and $Hxx(n)$ represents the dominant term.

Energy $h2(n)$ of a cross term of each tap coefficient is a sum of a real part squared and an imaginary part squared of the cross term, written as:

$h2(n) = (real(Hxy(n)))^2 + (imag(Hxy(n)))^2$, where $n \geq 1$, n is less than or equal to N, and N is the number of tap coefficients in the tap coefficient queue. $Hxy(n)$ represents the cross term.

Energy $h3(n)$ of each tap coefficient is a sum of the energy of the dominant term and the energy of the cross term, written as:

$h3(n) = h1(n)+ h2(n)$, where $n \geq 1$, n is less than or equal to N, and N is the number of tap coefficients in the tap coefficient queue.

The total amount of energy sh3 of the plurality of tap coefficients is written as:

$$sh3 = \sum_{n=1}^{N} h3(n)$$

, where $n \geq 1$, n is less than or equal to N, and N is the number of tap coefficients in the tap coefficient queue.

In step 200, the set proportionality coefficient corresponding to each boundary is less than 1. The proportionality coefficient includes a first proportionality coefficient para1, a second proportionality coefficient para2, a third proportionality coefficient para3 and a fourth proportionality coefficient para4. Accordingly, the product includes a first product of the total amount of energy and the first proportionality coefficient, a second product of the total amount of energy and the second proportionality coefficient, a third product of the total amount of energy and the third proportionality coefficient, and a fourth product of the total amount of energy and the fourth proportionality coefficients. The first product, the second product, the third product, and the fourth product are respectively represented as:

sh3•para1, sh3•para2, sh3•para3, and sh3•para4.

Based on the proportionality coefficient, whether energy of an individual tap coefficient is greater than or less than a certain proportion of the total amount of energy of the plurality of tap coefficients can be determined to determine whether the energy of the individual tap coefficient is greater than or less than a set value. In practical applications, a value of the proportionality coefficient is set according to a simulation result and is related to the number of tap coefficients in the adaptive equalizer. For example, in an adaptive equalizer with 19 tap coefficients, para1, para2, para3 and para4 may be set to 1/4, 3/64, 2/32, and 1/4, respectively. However, in an adaptive equalizer with more than 19 tap coefficients, the four proportionality coefficients are smaller than the above values respectively.

In the process of adjusting the center position in the plurality of tap coefficients of the adaptive equalizer, the adjustment step size of the plurality of tap coefficients of the adaptive equalizer may be set by the adaptive equalizer itself. For example, the adjustment step size is 1 tap, 2 taps, or 3 taps each time. T is set to a positive integer. In a case where the adjustment step size in a center position adjustment instruction is T taps each time, after the preceding calculations are completed, whether to generate the center position adjustment instruction is determined according to whether the three conditions below are satisfied.

A first prerequisite is that energy of at least one of T successive tap coefficients starting from a first tap coefficient at the first boundary is greater than the first product or energy of a (T+1)-th tap coefficient at the first boundary is greater than the fourth product.

A physical meaning of the first prerequisite is to determine whether the energy of at least one of the T successive tap coefficients starting from the first tap coefficient at the first boundary is greater than a certain proportion of the total amount of energy and a value of the proportion is determined by the first proportionality coefficient or the fourth proportionality coefficient. Only when the energy of at least one of the T successive tap coefficients starting from the first tap coefficient at the first boundary is greater than the certain proportion of the total amount of energy, can a center position adjustment prerequisite exist.

A first wrong movement prevention condition is that a total amount of energy of T successive tap coefficients starting from an (N+1-T)-th tap coefficient at the second boundary is less than the second product.

A physical meaning of the first wrong movement prevention condition is to determine whether the total amount of energy of the T successive tap coefficients starting from the (N+1-T)-th tap coefficient at the second boundary is less than a certain proportion of the total amount of energy and the proportion is determined by the second proportionality coefficient. Only when the total amount of energy of the T successive tap coefficients starting from the (N+1-T)-th tap coefficient at the second boundary is less than the certain proportion of the total amount of energy, can a tap coefficient with greater energy be prevented from being moved out of the positions of the tap coefficients after the center position is adjusted.

A first anti-recurrence condition is that energy of an (N-T)-th tap coefficient at the second boundary is less than the third product.

A physical meaning of the first anti-recurrence condition is to determine whether the energy of the (N-T)-th tap coefficient at the second boundary is less than a certain proportion of the total amount of energy and the proportion is determined by the third proportionality coefficient. Only when the energy of the (N-T)-th tap coefficient at the second boundary is less than the certain proportion of the total amount of energy, can the tap coefficient with greater energy be prevented from being recurring at the boundaries after the center position is adjusted.

When the first prerequisite, the first wrong movement prevention condition and the first anti-recurrence condition are all satisfied, the center position in the plurality of tap coefficients is adjusted.

In the embodiment of the present invention, the adjustment step size of the plurality of tap coefficients of the adaptive equalizer is set to 2 taps each time, the plurality of tap coefficients of the adaptive equalizer with the number N of tap coefficients in the tap coefficient queue are sequentially numbered from the first tap coefficient at the first boundary, the tap coefficient at the second boundary is an N-th tap coefficient.

The above condition 1 to be satisfied for adjusting the center position in the plurality of tap coefficients may be represented by the following formula:
$(h3(1) \geq sh3 \cdot para1 || h3(2) \geq sh3 \cdot para1 || h3(3) \geq sh3 \cdot para4) \&\& (h3(N)+h3(N-1)) \leq sh3 \cdot para2 \&\& h3(N-2) \leq sh3 \cdot para3$, where $n \geq 1$, n is less than or equal to N, and N is the number of tap coefficients in the tap coefficient queue.

A physical meaning of $h3(1) \geq sh3 \cdot para1 || h3(2) \geq sh3 \cdot para1 || h3(3) \geq sh3 \cdot para4$ is to determine whether any of the following three conditions is satisfied: energy of the first tap coefficient is greater than the first product, energy of a second tap coefficient is greater than the first product, and energy of the third tap coefficient is greater than the fourth product.

A physical meaning of $(h3(N)+h3(N-1)) \leq sh3 \cdot para2$ is to determine whether a total amount of energy of the N-th tap coefficient and an (N-1)-th tap coefficient is less than the second product.

A physical meaning of $h3(N-2) \leq sh3 \cdot para3$ is to determine whether energy of an (N-2)-th tap coefficient is less than the third product.

When the condition 1 is satisfied, 2 tap coefficients at the second boundary are moved to the first boundary of the tap coefficient queue to adjust the center position in the plurality of tap coefficients.

Another case of adjusting the center position in the plurality of tap coefficients is to move T tap coefficients at the first boundary to the second boundary of the tap coefficient queue under a condition that a second prerequisite, a second wrong movement prevention condition and a second anti-recurrence condition are all satisfied.

The second prerequisite is that energy of at least one of the T successive tap coefficients starting from the (N+1-T)-th tap coefficient at the second boundary is greater than the first product or the energy of the (N-T)-th tap coefficient at the second boundary is greater than the fourth product.

The second wrong movement prevention condition is that a total amount of energy of the T successive tap coefficients starting from the first tap coefficient at the first boundary is less than the second product.

The second anti-recurrence condition is that the energy of the (T+1)-th tap coefficient at the first boundary is less than the third product, where N is the number of tap coefficients in the tap coefficient queue.

When the adjustment step size of the plurality of tap coefficients of the adaptive equalizer is 2 taps each time, a condition 2 to be satisfied for moving the 2 tap coefficients at the first boundary to the second boundary of the tap coefficient queue may be represented by the following formula:
$(h3(N) \geq sh3 \cdot para1 || h3(N-1) \geq sh3 \cdot para1 || h3(N-2) \geq sh3 \cdot para4) \&\& (h3(1)+h3(2)) \leq sh3 \cdot para2 \&\& h3(3) \leq sh3 \cdot para3$, where $n \geq 1$, n is less than or equal to N, and N is the number of tap coefficients in the tap coefficient queue.

A physical meaning of $h3(N) \geq sh3 \cdot para1 || h3(N-1) \geq sh3 \cdot para1 || h3(N-2) \geq sh3 \cdot para4$ is to determine whether any of the following three conditions is satisfied: energy of the N-th tap coefficient is greater than the first product, energy of the (N-1)-th tap coefficient is greater than the first product, and energy of the (N-2)-th tap coefficient is greater than the fourth product is satisfied.

A physical meaning of $(h3(1)+h3(2)) \leq sh3 \cdot para2$ is to determine whether a total amount of energy of the first tap coefficient and the second tap coefficient is less than the second product.

A physical meaning of $h3(3) \leq sh3 \cdot para3$ is to determine whether the energy of the third tap coefficient is less than the third product.

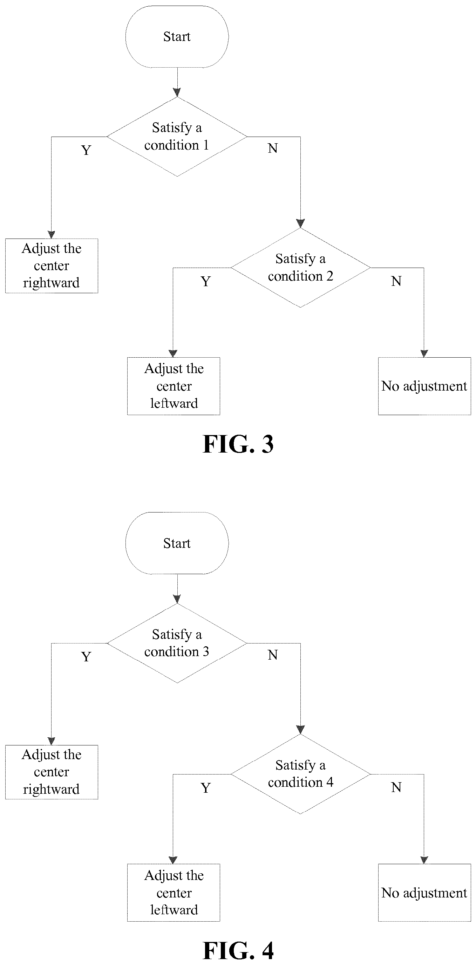

In the method shown in FIG. 3 in the embodiment of the present invention, it is first determined whether the condition 1 is satisfied; when the condition 1 is satisfied, a step of moving the 2 tap coefficients at the second boundary to the first boundary of the tap coefficient queue is performed. Next, if the condition 1 is not satisfied, it is determined whether the condition 2 is satisfied; when the condition 2 is satisfied, a step of moving the 2 tap coefficients at the first boundary to the second boundary of the tap coefficient queue is performed. Otherwise, when neither the condition 1 nor the condition 2 is satisfied, the center position in the plurality of tap coefficients will not be adjusted.

In the embodiment of the present invention, when the plurality of tap coefficients of the adaptive equalizer are adjusted, whether the condition 2 is satisfied may be determined first, and if the condition 2 is not satisfied, whether the condition 1 is satisfied is determined. An order in which the condition 1 and the condition 2 are determined may be changed, but a conclusion of adjusting the center position in the plurality of tap coefficients of the adaptive equalizer is the same: when the condition 1 is satisfied, the step of moving the 2 tap coefficients at the second boundary to the first boundary of the tap coefficient queue is performed, that is, adjusting the center rightward; when the condition 2 is satisfied, the step of moving the 2 tap coefficients at the first boundary to the second boundary of the tap coefficient queue is preformed, that is, adjusting the center leftward; otherwise, when neither the condition 1 nor the condition 2 is satisfied, the center position in the plurality of tap coefficients will not be adjusted.

In the embodiment of the present invention, the severity of determination conditions for adjusting the center position in the plurality of tap coefficients is changed by varying the values of the proportionality coefficients, and a frequency at which the center position in the plurality of tap coefficients is adjusted is controlled thereby.

When it is determined that the adaptive equalizer enters a convergence state, the first proportionality coefficient is set to a first value greater than an initial value of the first proportionality coefficient; the second proportionality coefficient is set to a second value greater than an initial value of the second proportionality coefficient; the third proportionality coefficient is set to a third value greater than an initial value of the third proportionality coefficient; and the fourth proportionality coefficient is set to a fourth value greater than an initial value of the fourth proportionality coefficient.

In the embodiment of the present invention, in the adaptive equalizer with 19 tap coefficients, before the adaptive equalizer enters the convergence state, the initial values of the proportionality coefficients para1, para2, para3 and para4 are set to 1/4, 3/64, 2/32 and 1/4, respectively. After the adaptive equalizer enters the convergence state, the proportionality coefficients, para1, para2, para3, and para4, are set to 3/8, 3/128, 3/64, and 3/8, respectively.

When the adaptive equalizer enters the convergence state, data is adjusted according to the preceding proportionality coefficients. Only when the T+1 tap coefficients at one boundary have greater energy, can the center positon adjustment prerequisite exist; only when the total amount of energy of the T tap coefficients at the other boundary is less, can the tap coefficient with greater energy be prevented from being moved out of the positions of the plurality of tap coefficients after the center position is adjusted; and only when the (T+1)-th tap coefficient at the other boundary has less energy, can the tap coefficient with greater energy be prevented from recurring at the boundaries after the center position is adjusted. Only in this way can the frequency at which a center of the plurality of tap coefficients is adjusted be controlled, which is advantageous to system stability.

In the method and device for adjusting the plurality of tap coefficients of the adaptive equalizer provided by the present invention, the proportionality coefficient corresponding to each boundary is set based on the T+1 tap coefficients at each boundary, and the product of the total amount of energy and the proportionality coefficient corresponding to each boundary is calculated; then the energy of each of the T+1 tap coefficients at the first boundary is compared with the product corresponding to the first boundary, the total amount of energy of the T tap coefficients at the second boundary is compared with the product corresponding to the second boundary, the energy of the (T+1)-th tap coefficient from the second boundary is compared with the product corresponding to the second boundary, and the comparison result is generated; and the center position in the plurality of tap coefficients is adjusted according to the comparison result. The solution may not only move the tap coefficient with greater energy to the more central position of the plurality of tap coefficients but also avoid a case where filter performance losses are caused by moving other tap coefficients with greater energy out of the positions of the plurality of coefficients in a movement process and a case where filter performance is not improved because the other tap coefficients with greater energy recur at the boundaries after the movement process. Compared with the existing art, stable filter performance may be ensured while the center position of the adaptive equalizer is adjusted.

Embodiment 2

Based on the embodiment 1, the adjustment step size of the plurality of tap coefficients of the adaptive equalizer each time becomes 1 tap, that is, T=1 in this embodiment of the present invention.

In this case, a condition 3 or a condition 4 needs to be satisfied for adjusting the center position in the plurality of tap coefficients. The condition 3 may be represented as:

$(h3(1)>=sh3\cdot para1||h3(2)>=sh3\cdot para4)\&\&h3(N)<=sh3\cdot para2\&\&h3(N-1)<=sh3\cdot para3$, where $n \geq 1$, n is less than or equal to N, and N is the number of tap coefficients in the tap coefficient queue.

The condition 4 may be represented as:

$(h3(N)>=sh3\cdot para1||h3(N-1)>=sh3\cdot para4)\&\&h3(1)<=sh3\cdot para2\&\&h3(2)<=sh3\cdot para3$, where $n \geq 1$, n is less than or equal to N, and N is the number of tap coefficients in the tap coefficient queue.

In the adjustment method shown in FIG. 4 in the embodiment of the present invention, it is first determined whether the condition 3 is satisfied; when the condition 3 is satisfied, a step of moving 1 tap coefficient at the second boundary to the first boundary of the tap coefficient queue is performed, that is, adjusting the center rightward. Next, if the condition 3 is not satisfied, it is determined whether the condition 4 is satisfied; when the condition 4 is satisfied, a step of moving 1 tap coefficient at the first boundary to the second boundary of the tap coefficient queue is performed; that is, adjusting the center leftward. Otherwise, when neither the condition 3 nor the condition 4 is satisfied, the center position in the plurality of tap coefficients will not be adjusted.

An order in which the condition 3 and the condition 4 are determined may be changed.

Embodiment 3

Based on the embodiment 1, the adjustment step size of the plurality of tap coefficients of the adaptive equalizer each time becomes 3 taps, that is, T=3 in this embodiment of the present invention.

In this case, a condition 5 or a condition 6 needs to be satisfied for adjusting the center position in the plurality of tap coefficients. The condition 5 may be represented as:
$(h3(1)>=sh3 \cdot para1||h3(2)>=sh3 \cdot para1||h3(3)>=sh3 \cdot para1||h3(4)>=sh3 \cdot para4)$ && $(h3(N)+h3(N-1)+h3(N-2))<=sh3 \cdot para2$ && $h3(N-3)<=sh3 \cdot para3$, where $n\geq1$, n is less than or equal to N, and N is the number of tap coefficients in the tap coefficient queue.

The condition 6 may be represented as:
$(h3(N)>=sh3 \cdot para1||h3(N-1)>=sh3 \cdot para1||h3(N-2)>=sh3 \cdot para1||h3(N-3)>=sh3 \cdot para4)$ && $(h3(1)+h3(2)+h3(3))<=sh3 \cdot para2$ && $h3(4)<=sh3 \cdot para3$, where $n\geq1$, n is less than or equal to N, and N is the number of tap coefficients in the tap coefficient queue.

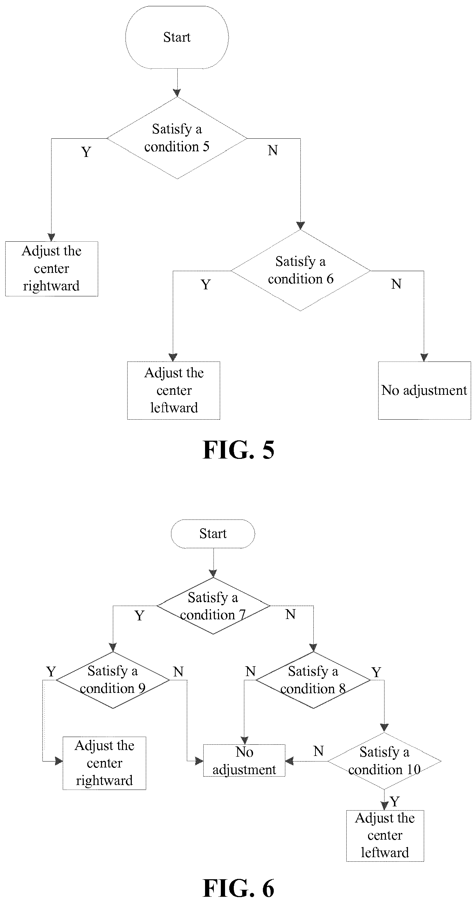

In the adjustment method shown in FIG. 5 in the embodiment of the present invention, it is first determined whether the condition 5 is satisfied; when the condition 5 is satisfied, a step of moving 3 tap coefficients at the second boundary to the first boundary of the tap coefficient queue is performed, that is, adjusting the center rightward. Next, if the condition 5 is not satisfied, it is determined whether the condition 6 is satisfied; when the condition 6 is satisfied, a step of moving 3 tap coefficients at the first boundary to the second boundary of the tap coefficient queue is performed; that is, adjusting the center leftward. Otherwise, when neither the condition 5 nor the condition 6 is satisfied, the center position in the plurality of tap coefficients will not be adjusted.

An order in which the condition 5 and the condition 6 are determined may be changed.

Embodiment 4

As shown in FIG. 6, in the adjustment method in this embodiment of the present invention, the adjustment step size of the plurality of tap coefficients of the adaptive equalizer each time is 2 taps, that is, T=2.

In this method, it needs to be first determined that energy of at least one of 2 successive tap coefficients starting from the first tap coefficient at the first boundary is greater than the first product or the energy of the third tap coefficient at the first boundary is greater than the fourth product; or that energy of at least one of 2 successive tap coefficients starting from the (N-1)-th tap coefficient at the second boundary is greater than the first product or the energy of the (N-2)-th tap coefficient at the second boundary is greater than the fourth product. That is, whether a condition 7 or a condition 8 is satisfied needs to be determined.

The condition 7 may be represented as:
$h3(1)>=sh3 \cdot para1||h3(2)>=sh3 \cdot para1||h3(3)>=sh3 \cdot para4$.

A physical meaning of the condition 7 is to determine whether energy of any one of three tap coefficients at a left boundary is greater than a certain proportion of the total amount of energy.

The condition 8 may be represented as:
$h3(N)>=sh3 \cdot para1||h3(N-1)>=sh3 \cdot para1||h3(N-2)>=sh3 \cdot para4$, where $n\geq1$, n is less than or equal to N, and N is the number of tap coefficients in the tap coefficient queue.

A physical meaning of the condition 8 is to determine whether energy of any one of three tap coefficients at a right boundary is greater than the certain proportion of the total amount of energy.

If neither the condition 7 nor the condition 8 is satisfied, the center position in the plurality of tap coefficients is not adjusted.

If the condition 7 is satisfied, it needs to be determined whether a total amount of energy of the 2 successive tap coefficients starting from the (N-1)-th tap coefficient at the second boundary is less than the second product and whether the energy of the (N-2)-th tap coefficient at the second boundary is less than the third product, that is, whether a condition 9 is satisfied. The condition 9 may be represented as:
$(h3(N)+h3(N-1))<=sh3 \cdot para2$ && $h3(N-2)<=sh3 \cdot para3$,
where $n\geq1$, n is less than or equal to N, and N is the number of tap coefficients in the tap coefficient queue.

A physical meaning of the condition 9 is to determine whether the total amount of energy of the N-th tap coefficient and the (N-1)-th tap coefficient at the right boundary is less than the second product and whether the energy of the (N-2)-th tap coefficient is less than the third product.

If the condition 9 is satisfied, the step of moving the 2 tap coefficients at the second boundary to the first boundary of the tap coefficient queue is performed, that is, adjusting the center rightward. If the condition 9 is not satisfied, the center position in the plurality of tap coefficients is not adjusted.

If the condition 8 is satisfied, it needs to be determined whether a total amount of energy of the 2 successive tap coefficients starting from the first tap coefficient at the first boundary is less than the second product and whether the energy of the third tap coefficient at the first boundary is less than the third product, that is, whether a condition 10 holds. The condition 10 may be represented as:

(h3(1)+h3(2))<=sh3·para2&&h3(3)<=sh3·para3.

A physical meaning of the condition 10 is to determine whether the total amount of energy of the first tap coefficient and the second tap coefficient at the left boundary is less than the second product and whether the energy of the third tap coefficient is less than the third product.

If the condition 10 is satisfied, the step of moving the 2 tap coefficients at the first boundary to the second boundary of the tap coefficient queue is performed, that is, adjusting the center leftward. If the condition 10 is not satisfied, the center position in the plurality of tap coefficients is not adjusted.

In the embodiment of the present invention, as shown in FIG. 6, whether the condition 7 is satisfied is first determined; when the condition 7 is not satisfied, whether the condition 8 is satisfied is then determined. However, it is not limited thereto in the practical applications. Whether the condition 8 is satisfied may be first determined; when the condition 8 is not satisfied, whether the condition 7 is satisfied may be then determined.

Embodiment 5

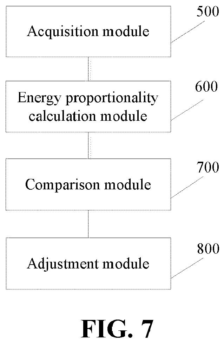

As shown in FIG. 7, an adjustment device provided by the embodiment of the present invention includes an acquisition module 500, an energy proportionality calculation module 600, a comparison module 700 and an adjustment module 800.

The acquisition module 500 is configured to acquire energy of a number T+1 of tap coefficients at each boundary of a plurality of boundaries in a tap coefficient queue of a plurality of tap coefficients of an adaptive equalizer, and calculate a total amount of energy of the plurality of tap coefficients in the tap coefficient queue, where T is a preset adjustment step size of the plurality of tap coefficients of the adaptive equalizer and T is a positive integer.

The energy proportionality calculation module 600 is configured to set a proportionality coefficient corresponding to each boundary based on the number T+1 of tap coefficients at each boundary, and calculate a product of the total amount of energy and the proportionality coefficient corresponding to each boundary.

The comparison module 700 is configured to compare energy of each of T+1 tap coefficients at a first boundary of the plurality of boundaries with the product corresponding to the first boundary, compare a total amount of energy of a number T of tap coefficients at a second boundary of the plurality of boundaries with the product corresponding to the second boundary, compare energy of a (T+1)-th tap coefficient from the second boundary with the product corresponding to the second boundary, and generate a comparison result.

The adjustment module 800 is configured to adjust a center position in the plurality of tap coefficients according to the comparison result.

In this embodiment, the adjustment module 800 adjusts the center position in the plurality of tap coefficients according to the comparison result to enable tap coefficients with greater energy to move to a more central position in the plurality of tap coefficients to enhance stability of a high-speed optical transmission system.

In this embodiment, the acquisition 500 acquires energy of each tap coefficient and the total amount of energy through the steps described below.

In a filter shown in FIG. 1, energy h1(n) of a dominant term of each tap coefficient is a sum of a real part squared and an imaginary part squared of the dominant term, written as:

$h1(n) = (real(Hxx(n)))^2 + (imag(Hxx(n)))^2$, where $n \geq 1$, n is less than or equal to N, and N is a number of tap coefficients in the tap coefficient queue.

Energy h2(n) of a cross term of each tap coefficient is a sum of a real part squared and an imaginary part squared of the cross term, written as:

$h2(n) = (real(Hxy(n)))^2 + (imag(Hxy(n)))^2$, where $n \geq 1$, n is less than or equal to N, and N is the number of tap coefficients in the tap coefficient queue.

Energy h3(n) of each tap coefficient is a sum of the energy of the dominant term and the energy of the cross term, written as:

$h3(n) = h1(n) + h2(n)$, where $n \geq 1$, n is less than or equal to N, and N is the number of tap coefficients in the tap coefficient queue.

The total amount of energy sh3 of the plurality of tap coefficients is written as:

$$sh3 = \sum_{n=1}^{N} h3(n)$$

, where $n \geq 1$, n is less than or equal to N, and N is the number of tap coefficients in the tap coefficient queue.

In the embodiment of the present invention, the set proportionality coefficient corresponding to each boundary is less than 1. The proportionality coefficient includes a first proportionality coefficient para1, a second proportionality coefficient para2, a third proportionality coefficient para3 and a fourth proportionality coefficient para4. Accordingly, the product includes a first product of the total amount of energy and the first proportionality coefficient, a second product of the total amount of energy and the second proportionality coefficient, a third product of the total amount of energy and the third proportionality coefficient, and a fourth product of the total amount of energy and the fourth proportionality coefficients. The first product, the second product, the third product, and the fourth product are respectively represented as:

sh3·para1, sh3·para2, sh3·para3 and sh3·para4.

The proportionality coefficient is essentially a ratio. Based on the ratio, whether energy of an individual tap coefficient is greater than or less than a certain proportion of the total amount of energy of the plurality of tap coefficients can be determined to determine whether the energy of the individual tap coefficient is greater than or less than a set value. In practical applications, a value of the proportionality coefficient is set according to a simulation result and is related to the number of tap coefficients in the adaptive equalizer. For example, in an adaptive equalizer with 19 tap coefficients, para1, para2, para3, and para4 may be set to 1/4, 3/64, 2/32, and 1/4, respectively. However, in an adaptive equalizer with more than 19 tap coefficients, the four proportionality coefficients are smaller than the above values respectively.

In the process of adjusting the center position in the plurality of tap coefficients of the adaptive equalizer, the adjustment step size of the plurality of tap coefficients of the adaptive equalizer may be set by the adaptive equalizer itself. For example, the adjustment step size is 1 tap, 2 taps, or 3 taps each time. T is set to a positive integer. In a case where the adjustment step size in a center position adjustment instruction is T taps each time, after the preceding calculations are completed, whether to generate the center position adjustment instruction is determined by the adjustment module 800 provided by the embodiment of the present invention according to whether the three conditions below are satisfied based on the comparison result generated by the comparison module 700.

A first prerequisite is that energy of at least one of T successive tap coefficients starting from a first tap coefficient at the first boundary is greater than the first product or energy of a (T+1)-th tap coefficient at the first boundary is greater than the fourth product.

A physical meaning of the first prerequisite is to determine whether the energy of at least one of the T successive tap coefficients starting from the first tap coefficient at the first boundary is greater than a certain proportion of the total amount of energy and a value of the proportion is determined by the first proportionality coefficient or the fourth proportionality coefficient. Only when the energy of at least one of the T successive tap coefficients starting from the first tap coefficient at the first boundary is greater than the certain proportion of the total amount of energy, can a center position adjustment prerequisite exist.

A first wrong movement prevention condition is that a total amount of energy of T successive tap coefficients starting from a (N+1-T)-th tap coefficient at the second boundary is less than the second product.

A physical meaning of the first wrong movement prevention condition is to determine whether the total amount of energy of the T successive tap coefficients starting from the (N+1-T)-th tap coefficient at the second boundary is less than a certain proportion of the total amount of energy and the proportion is determined by the second proportionality coefficient. Only when the total amount of energy of the T successive tap coefficients starting from the (N+1-T)-th tap coefficient at the second boundary is less than the certain proportion of the total amount of energy, can a tap coefficient with greater energy be prevented from being moved out of the positions of the tap coefficients after the center position is adjusted.

A first anti-recurrence condition is that energy of a (N-T)-th tap coefficient at the second boundary is less than the third product.

A physical meaning of the first anti-recurrence condition is to determine whether the energy of the (N-T)-th tap coefficient at the second boundary is less than a certain proportion of the total amount of energy and the proportion is determined by the third proportionality coefficient. Only when the energy of the (N-T)-th tap coefficient at the second boundary is less than the certain proportion of the total amount of energy, can the tap coefficient with greater energy be prevented from being recurring at the boundaries after the center position is adjusted.

When the first prerequisite, the first wrong movement prevention condition and the first anti-recurrence condition are all satisfied, the center position in the plurality of tap coefficients is adjusted.

In the embodiment of the present invention, the adjustment step size of the plurality of tap coefficients of the adaptive equalizer is set to 2 taps each time, the plurality of tap coefficients of the adaptive equalizer with the number N of tap coefficients in the tap coefficient queue are sequentially numbered from the first tap coefficient at the first boundary, the tap coefficient at the second boundary is an N-th tap coefficient.

The above condition 1 to be satisfied for adjusting the center position in the plurality of tap coefficients may be represented by the following formula: $(h3(1)>=sh3 \cdot para1 || h3(2)>=sh3 \cdot para1 || h3(3)>=sh3 \cdot para4) \&\& (h3(N)+h3(N-1))<=sh3 \cdot para2 \&\& h3(N-2)<=sh3 \cdot para3$, where $n \geq 1$, n is less than or equal to N, and N is the number of tap coefficients in the tap coefficient queue.

A physical meaning of $h3(1)>=sh3 \cdot para1 || h3(2)>=sh3 \cdot para1 || h3(3)>=sh3 \cdot para4$ is to determine whether any of the following three conditions is satisfied: energy of the first tap coefficient is greater than the first product, energy of a second tap coefficient is greater than the first product, and energy of the third tap coefficient is greater than the fourth product.

A physical meaning of $(h3(N)+h3(N-1))<=sh3 \cdot para2$ is to determine whether a total amount of energy of the N-th tap coefficient and an (N-1)-th tap coefficient is less than the second product.

A physical meaning of $h3(N-2)<=sh3 \cdot para3$ is to determine whether energy of an (N-2)-th tap coefficient is less than the third product.

When the condition 1 is satisfied, 2 tap coefficients at the second boundary are moved to the first boundary of the tap coefficient queue to adjust the center position in the plurality of tap coefficients.

Another case of adjusting the center position in the plurality of tap coefficients is to move T tap coefficients at the first boundary to the second boundary of the tap coefficient queue. The adjustment module 800 is configured to determine that energy of at least one of the T successive tap coefficients starting from the (N+1-T)-th tap coefficient at the second boundary is greater than the first product, or the energy of the (N-T)-th tap coefficient at the second boundary is greater than the fourth product; determine that a total amount of energy of the T successive tap coefficients starting from the first tap coefficient at the first boundary is less than the second product, and the energy of the (T+1)-th tap coefficient at the first boundary is less than the third product, where N is the number of tap coefficients in the tap coefficient queue; and adjust the center position in the plurality of the tap coefficients.

Specifically, a condition for the adjustment step is that a second prerequisite, a second wrong movement prevention condition and a second anti-recurrence condition are all satisfied.

A second prerequisite is that the energy of at least one of the T successive tap coefficients starting from the (N+1-T)-th tap coefficient at the second boundary is greater than the first product or the energy of the (N-T)-th tap coefficient at the second boundary is greater than the fourth product.

The second wrong movement prevention condition is that the total amount of energy of the T successive tap coefficients starting from the first tap coefficient at the first boundary is less than the second product.

The second anti-recurrence condition is that the energy of the (T+1)-th tap coefficient at the first boundary is less than the third product, where N is the number of tap coefficients in the tap coefficient queue.

When the adjustment step size of the plurality of tap coefficients of the adaptive equalizer is 2 taps each time, a condition 2 to be satisfied for moving the T tap coefficients at the first boundary to the second boundary of the tap coefficient queue may be represented by the following formula:
(h3(N)>=sh3·para1||h3(N-1)>=sh3·para1||h3(N-2)>=sh3·para4)&&(h3(1)+h3(2))<=sh3·para2&&h3(3)<=sh3·para3, where n≥1, n is less than or equal to N, and N is the number of tap coefficients in the tap coefficient queue.

A physical meaning of h3(N)>=sh3·para1||h3(N-1)>=sh3·para1||h3(N-2)>=sh3·para4 is to determine whether any of the following three conditions is satisfied: energy of the N-th tap coefficient is greater than the first product, energy of the (N-1)-th tap coefficient is greater than the first product, and energy of the (N-2)-th tap coefficient is greater than the fourth product is satisfied.

A physical meaning of (h3(1)+h3(2))<=sh3·para2 is to determine whether a total amount of energy of the first tap coefficient and the second tap coefficient is less than the second product.

A physical meaning of h3(3)<=sh3·para3 is to determine whether the energy of the third tap coefficient is less than the third product.

The adjustment method in this embodiment is the same as that shown in FIG. 3 in the embodiment 1.

It is first determined whether the condition 1 is satisfied; when the condition 1 is satisfied, a step of moving the 2 tap coefficients at the second boundary to the first boundary of the tap coefficient queue is performed. Next, if the condition 1 is not satisfied, it is determined whether the condition 2 is satisfied; when the condition 2 is satisfied, a step of moving the 2 tap coefficients at the first boundary to the second boundary of the tap coefficient queue is performed. Otherwise, when neither the condition 1 nor the condition 2 is satisfied, the center position in the plurality of tap coefficients will not be adjusted.

The adjustment module 800 in the adjustment device provided by the embodiment of the present invention is further configured to determine that the energy of at least one of the T successive tap coefficients starting from the first tap coefficient at the first boundary is greater than the first product or the energy of the (T+1)-th tap coefficient at the first boundary is greater than the fourth product; or that the energy of at least one of the T successive tap coefficients starting from the (N+1-T)-th tap coefficient at the second boundary is greater than the first product or the energy of the (N-T)-th tap coefficient at the second boundary is greater than the fourth product.

In a case of determining that the energy of at least one of the T successive tap coefficients starting from the first tap coefficient at the first boundary is greater than the first product or the energy of the (T+1)-th tap coefficient at the first boundary is greater than the fourth product, the adjustment module 800 is further configured to perform the operations described below.

It is determined that the total amount of energy of the T successive tap coefficients starting from the (N+1-T)-th tap coefficient at the second boundary is less than the second product and the energy of the (N-T)-th tap coefficient at the second boundary is less than the third product, where N is the number of tap coefficients in the tap coefficient queue.

The T tap coefficients at the second boundary are moved to the first boundary of the tap coefficient queue.

In a case of determining that the energy of at least one of the T successive tap coefficients starting from the (N+1-T)-th tap coefficient at the second boundary is greater than the first product or the energy of the (N-T)-th tap coefficient at the second boundary is greater than the fourth product, the adjustment module 800 is further configured to perform the operations described below.

It is determined that the total amount of energy of the T successive tap coefficients starting from the first tap coefficient at the first boundary is less than the second product and the energy of the (T+1)-th tap coefficient at the first boundary is less than the third product, where N is the number of tap coefficients in the tap coefficient queue.

The T tap coefficients at the first boundary are moved to the second boundary of the tap coefficient queue.

In the embodiment of the present invention, the severity of determination conditions for adjusting the center position in the plurality of tap coefficients is changed by varying the values of the proportionality coefficients and a frequency at which the center position in the plurality of tap coefficients is adjusted is controlled thereby.

In the embodiment of the present invention, the adjustment device further includes the energy proportionality calculation module 600. When it is determined that the adaptive equalizer enters a convergence state, the energy proportionality calculation module 600 is configured to set the first proportionality coefficient to a first value greater than an initial value of the first proportionality coefficient; set the second proportionality coefficient to a second value greater than an initial value of the second proportionality coefficient; set the third proportionality coefficient to a third value greater than an initial value of the third proportionality coefficient; and set the fourth proportionality coefficient to a fourth value greater than an initial value of the fourth proportionality coefficient.

When the adaptive equalizer enters the convergence state, data is adjusted according to the preceding proportionality coefficients. Only when the T+1 tap coefficients at one boundary have greater energy, can the center positon adjustment prerequisite exist; only when the total amount of energy of the T tap coefficients at the other boundary is less, can the tap coefficient with greater energy be prevented from being moved out of the positions of the plurality of tap coefficients after the center position is adjusted; and only when the (T+1)-th tap coefficient at the other boundary has less energy, can the tap coefficient with greater energy be prevented from recurring at the boundaries after the center position is adjusted. Only in this way can the frequency at which a center of the plurality of tap coefficients is adjusted be controlled, which is advantageous to system stability.

The tap coefficient adjustment device provided by the embodiment of the present invention includes the energy proportionality calculation module configured to set the proportionality coefficient corresponding to each boundary based on the T+1 tap coefficients at each boundary and calculate the product of the total amount of energy and the proportionality coefficient corresponding to each boundary, the comparison module, and the adjustment module configured to adjust the center position in the plurality of tap coefficients according to the comparison result. The solution may not only move the tap coefficient with greater energy to the more central position of the plurality of tap coefficients but also avoid a case where filter performance losses are caused by moving other tap coefficients with greater energy out of the positions of the plurality of coefficients in a movement process and a case where filter performance is not improved because the other tap coefficients with greater energy recur at the boundaries after the movement process. Compared with the existing art, stable filter performance may be ensured while the center position of the adaptive equalizer is adjusted.

It should be understood by those skilled in the art that the embodiments of the present invention may be provided as methods, systems, or computer program products. Therefore, the present invention may adopt a mode of a hardware embodiment, a software embodiment, or a combination of hardware and software embodiments. In addition, the present invention may adopt a form of a computer program product implemented on one or more computer-usable storage media (including, but not limited to, a disk memory, an optical memory and the like) which include computer-usable program codes.

The present invention is described with reference to flowcharts and/or block diagrams of methods, apparatuses (systems) and computer program products according to the embodiments of the present invention. It should be understood that computer program instructions implement each flow and/or block in the flowcharts and/or block diagrams and a combination of flows and/or blocks in the flowcharts and/or block diagrams. These computer program instructions can be provided to a general-purpose computer, a special-purpose computer, an embedded processor or a processor of another programmable data processing apparatus to produce a machine so that instructions executed by a computer or the processor of another programmable data processing apparatus produce a means for implementing functions specified in one or more flows in the flowcharts and/or one or more blocks in the block diagrams.

These computer program instructions can also be stored in a computer-readable memory which can direct the computer or another programmable data processing apparatus to operate in a particular manner so that the instructions stored in the computer-readable memory produce a manufactured product including an instructing means. The instructing means implements the functions specified in one or more flows in the flowcharts and/or one or more blocks in the block diagrams.

These computer program instructions can also be loaded onto the computer or another programmable data processing apparatus so that a series of operations and steps are performed on the computer or another programmable apparatus to produce processing implemented by the computer. Therefore, instructions executed on the computer or another programmable apparatus provide steps for implementing the functions specified in one or more flows in the flowcharts and/or one or more blocks in the block diagrams. The above are only preferred embodiments of the present invention and are not intended to limit the scope of the present invention which is defined by the appended claims.

## INDUSTRIAL APPLICABILITY

The solution in the embodiments of the present invention may not only move the tap coefficient with greater energy to the more central position of the plurality of tap coefficients but also avoid a case where the filter performance losses are caused by moving other tap coefficients with greater energy out of the positions of the plurality of coefficients in a movement process and a case where the filter performance is not improved because the other tap coefficients with greater energy recur at the boundaries after the movement process. Compared with the existing art, the stable filter performance may be ensured while the center position of the adaptive equalizer is adjusted.

## Claims

1. A tap coefficient adjustment method, comprising:

   acquiring energy of a number T+1 of tap coefficients at each boundary of a plurality of boundaries in a tap coefficient queue of a plurality of tap coefficients of an adaptive equalizer, and calculating a total amount of energy of the plurality of tap coefficients in the tap coefficient queue, wherein T is a preset adjustment step size of the plurality of tap coefficients of the adaptive equalizer and T is a positive integer; **characterized by**
   setting a proportionality coefficient corresponding to the each boundary based on the number T+1 of tap coefficients at the each boundary, and calculating a product of the total amount of energy and the proportionality coefficient corresponding to the each boundary;
   comparing energy of each of T+1 tap coefficients at a first boundary of the plurality of boundaries with the product corresponding to the first boundary, comparing a total amount of energy of a number T of tap coefficients at a second boundary of the plurality of boundaries with the product corresponding to the second boundary, comparing energy of a (T+1)-th tap coefficient from the second boundary with the product corresponding to the second boundary, and generating a comparison result; and
   adjusting a center position in the plurality of tap coefficients according to the comparison result.

2. The method of claim 1, wherein the proportionality coefficient comprises a first proportionality coefficient, a second proportionality coefficient, a third proportionality coefficient and a fourth proportionality coefficient;
   the product comprises a first product of the total amount of energy and the first proportionality coefficient, a second product of the total amount of energy and the second proportionality coefficient, a third product of the total amount of energy and the third proportionality coefficient, and a fourth product of the total amount of energy and the fourth proportionality coefficient; wherein adjusting the center position in the plurality of tap coefficients according to the comparison result comprises:

   determining that energy of at least one of T successive tap coefficients starting from a first tap coefficient at the first boundary is greater than the first product or energy of a (T+1)-th tap coefficient at the first boundary is greater than the fourth product;
   determining that a total amount of energy of T successive tap coefficients starting from an (N+1-T)-th tap coefficient at the second boundary is less than the second product and energy of an (N-T)-th tap coefficient at the second boundary is less than the third product, wherein N is a number of tap coefficients in the tap coefficient queue; and
   adjusting the center position in the plurality of the tap coefficients.

3. The method of claim 2, wherein adjusting the center position in the plurality of tap coefficients comprises: moving the T tap coefficients at the second boundary to the first boundary of the tap coefficient queue.

4. The method of claim 1, wherein the proportionality coefficient comprises a first proportionality coefficient, a second proportionality coefficient, a third proportionality coefficient and a fourth proportionality coefficient;
   the product comprises a first product of the total amount of energy and the first proportionality coefficient, a second product of the total amount of energy and the second proportionality coefficient, a third product of the total amount of energy and the third proportionality coefficient, and a fourth product of the total amount of energy and the fourth proportionality coefficient; wherein adjusting the center position in the plurality of tap coefficients according to the comparison result comprises:

   determining that energy of at least one of T successive tap coefficients starting from an (N+1-T)-th tap coefficient at the second boundary is greater than the first product, or energy of an (N-T)-th tap coefficient at the second boundary is greater than the fourth product;
   determining that a total amount of energy of T successive tap coefficients starting from a first tap coefficient at the first boundary is less than the second product, and energy of a (T+1)-th tap coefficient at the first boundary is less than the third product, wherein N is a number of tap coefficients in the tap coefficient queue; and adjusting the center position in the plurality of the tap coefficients.

5. The method of claim 4, wherein adjusting the center position in the plurality of tap coefficients comprises: moving the T tap coefficients at the first boundary to the second boundary of the tap coefficient queue.

6. The method of claim 1, wherein the proportionality coefficient comprises a first proportionality coefficient, a second proportionality coefficient, a third proportionality coefficient and a fourth proportionality coefficient;

the product comprises a first product of the total amount of energy and the first proportionality coefficient, a second product of the total amount of energy and the second proportionality coefficient, a third product of the total amount of energy and the third proportionality coefficient, and a fourth product of the total amount of energy and the fourth proportionality coefficient;

wherein the method further comprises:

determining that energy of at least one of T successive tap coefficients starting from a first tap coefficient at the first boundary is greater than the first product or energy of a (T+1)-th tap coefficient at the first boundary is greater than the fourth product; or that energy of at least one of T successive tap coefficients starting from an (N+1-T)-th tap coefficient at the second boundary is greater than the first product or energy of an (N-T)-th tap coefficient at the second boundary is greater than the fourth product;

wherein in a case of determining that energy of at least one of T successive tap coefficients starting from the first tap coefficient at the first boundary is greater than the first product or energy of the (T+1)-th tap coefficient at the first boundary is greater than the fourth product, the method further comprises:

determining that a total amount of energy of the T successive tap coefficients starting from the (N+1-T)-th tap coefficient at the second boundary is less than the second product and the energy of the (N-T)-th tap coefficient at the second boundary is less than the third product, wherein N is a number of tap coefficients in the tap coefficient queue; and

moving the T tap coefficients at the second boundary to the first boundary of the tap coefficient queue;

or, in a case of determining that energy of at least one of T successive tap coefficients starting from the (N+1-T)-th tap coefficient at the second boundary is greater than the first product or energy of the (N-T)-th tap coefficient at the second boundary is greater than the fourth product, the method further comprises:

determining that a total amount of energy of the T successive tap coefficients starting from the first tap coefficient at the first boundary is less than the second product and the energy of the (T+1)-th tap coefficient at the first boundary is less than the third product, wherein N is the number of tap coefficients in the tap coefficient queue; and

moving the T tap coefficients at the first boundary to the second boundary of the tap coefficient queue.

7. The method of claim 3, 5 or 6, further comprising:

in response to determining that the adaptive equalizer enters a convergence state, setting the first proportionality coefficient to a first value, wherein the first value is greater than an initial value of the first proportional coefficient;

setting the second proportionality coefficient to a second value, wherein the second value is greater than an initial value of the second proportional coefficient;

setting the third proportionality coefficient to a third value, wherein the third value is greater than an initial value of the third proportional coefficient; and

setting the fourth proportionality coefficient to a fourth value, wherein the fourth value is greater than an initial value of the fourth proportional coefficient.

8. A tap coefficient adjustment device, comprising:

an acquisition module, which is configured to acquire energy of a number T+1 of tap coefficients at each boundary of a plurality of boundaries in a tap coefficient queue of a plurality of tap coefficients of an adaptive equalizer, and calculate a total amount of energy of the plurality of tap coefficients in the tap coefficient queue, wherein T is a preset adjustment step size of the plurality of tap coefficients of the adaptive equalizer and T is a positive integer; **characterized by** an energy proportionality calculation module, which is configured to set a proportionality coefficient corresponding to the each boundary based on the number T+1 of tap coefficients at the each boundary, and calculate a product of the total amount of energy and the proportionality coefficient corresponding to the each boundary;

a comparison module, which is configured to compare energy of each of T+1 tap coefficients at a first boundary of the plurality of boundaries with the product corresponding to the first boundary, compare a total amount of energy of a number T of tap coefficients at a second boundary of the plurality of boundaries with the product corresponding to the second boundary, compare energy of a (T+1)-th tap coefficient from the second boundary with the product corresponding to the second boundary, and generate a comparison result; and

an adjustment module, which is configured to adjust a center position in the plurality of tap coefficients according to the comparison result.

9. The device of claim 8, wherein the proportionality coefficient comprises a first proportionality coefficient, a second proportionality coefficient, a third proportionality coefficient and a fourth proportionality coefficient;

the product comprises a first product of the total amount of energy and the first proportionality coefficient, a second product of the total amount of energy and the second proportionality coefficient, a third product of the total amount of energy and the third proportionality coefficient, and a fourth product of the total amount of energy and the fourth proportionality coefficient; wherein the adjustment module is configured to:

determine that energy of at least one of T successive tap coefficients starting from a first tap coefficient at the first boundary is greater than the first product or energy of a (T+1)-th tap coefficient at the first boundary is greater than the fourth product;

determine that a total amount of energy of T successive tap coefficients starting from an (N+1-T)-th tap coefficient at the second boundary is less than the second product and energy of an (N-T)-th tap coefficient at the second boundary is less than the third product, wherein N is a number of tap coefficients in the tap coefficient queue; and

adjust the center position in the plurality of the tap coefficients.

10. The device of claim 9, wherein the adjustment of the center position in the plurality of tap coefficients comprises to move the T tap coefficients at the second boundary to the first boundary of the tap coefficient queue.

11. The device of claim 8, wherein the proportionality coefficient comprises a first proportionality coefficient, a second proportionality coefficient, a third proportionality coefficient and a fourth proportionality coefficient;

the product comprises a first product of the total amount of energy and the first proportionality coefficient, a second product of the total amount of energy and the second proportionality coefficient, a third product of the total amount of energy and the third proportionality coefficient, and a fourth product of the total amount of energy and the fourth proportionality coefficient; wherein the adjustment module is configured to:

determine that energy of at least one of T successive tap coefficients starting from an (N+1-T)-th tap coefficient at the second boundary is greater than the first product, or energy of an (N-T)-th tap coefficient at the second boundary is greater than the fourth product;

determine that a total amount of energy of T successive tap coefficients starting from a first tap coefficient at the first boundary is less than the second product, and energy of a (T+1)-th tap coefficient at the first boundary is less than the third product, wherein N is a number of tap coefficients in the tap coefficient queue; and

adjust the center position in the plurality of the tap coefficients.

12. The device of claim 11, wherein the adjustment of the center position in the plurality of tap coefficients comprises to move the T tap coefficients at the first boundary to the second boundary of the tap coefficient queue.

13. The device of claim 8, wherein the proportionality coefficient comprises a first proportionality coefficient, a second proportionality coefficient, a third proportionality coefficient and a fourth proportionality coefficient;

the product comprises a first product of the total amount of energy and the first proportionality coefficient, a second product of the total amount of energy and the second proportionality coefficient, a third product of the total amount of energy and the third proportionality coefficient, and a fourth product of the total amount of energy and the fourth proportionality coefficient;

wherein the adjustment module is configured to:

determine that energy of at least one of T successive tap coefficients starting from a first tap coefficient at the first boundary is greater than the first product or energy of a (T+1)-th tap coefficient at the first boundary is greater than the fourth product; or that energy of at least one of T successive tap coefficients starting from an (N+1-T)-th tap coefficient at the second boundary is greater than the first product or energy of an (N-T)-th tap coefficient at the second boundary is greater than the fourth product;

wherein in a case of determining that energy of at least one of T successive tap coefficients starting from the first tap coefficient at the first boundary is greater than the first product or energy of the (T+1)-th tap coefficient at the first boundary is greater than the fourth product, the adjustment module is further configured to:

determine that a total amount of energy of the T successive tap coefficients starting from the (N+1-T)-th tap coefficient at the second boundary is less than the second product and the energy of the (N-T)-th tap coefficient at the second boundary is less than the third product, wherein N is a number of tap coefficients in the tap coefficient queue; and

move the T tap coefficients at the second boundary to the first boundary of the tap coefficient queue;

or, in a case of determining that energy of at least one of T successive tap coefficients starting from the (N+1-T)-th tap coefficient at the second boundary is greater than the first product or energy of the (N-T)-th tap coefficient at the second boundary is greater than the fourth product, the adjustment module is further configured to:

determine that a total amount of energy of the T successive tap coefficients starting from the first tap coefficient at the first boundary is less than the second product and the energy of the (T+1)-th tap coefficient at the first boundary is less than the third product, wherein N is the number of tap coefficients in the tap coefficient queue; and

move the T tap coefficients at the first boundary to the second boundary of the tap coefficient queue.

14. The device of claim 10, 12 or 13, wherein the energy proportionality calculation module is further configured to:

in response to determining that the adaptive equalizer enters a convergence state, set the first proportionality coefficient to a first value, wherein the first value is greater than an initial value of the first proportional coefficient;

set the second proportionality coefficient to a second value, wherein the second value is greater than an initial value of the second proportional coefficient;

set the third proportionality coefficient to a third value, wherein the third value is greater than an initial value of the third proportional coefficient; and

set the fourth proportionality coefficient to a fourth value, wherein the fourth value is greater than an initial value of the fourth proportional coefficient.

15. A computer storage medium, storing computer-executable instructions configured to execute the tap coefficient adjustment method of any one of claims 1 to 7.

**Patentansprüche**

1. Abgriffkoeffizientenanpassungsverfahren, das Folgendes umfasst:

Erfassen von Energie von einer Anzahl T+1 Abgriffkoeffizienten an jeder Grenze einer Vielzahl von Grenzen in einer Abgriffkoeffizientenwarteschlange einer Vielzahl von Abgriffkoeffizienten eines adaptiven Entzerrers und Berechnen einer Energiegesamtmenge der Vielzahl von Abgriffkoeffizienten in der Abgriffkoeffizientenwarteschlange, wobei T eine voreingestellte Anpassungsschrittgröße der Vielzahl von Abgriffkoeffizienten des adaptiven Entzerrers und T eine positive Ganzzahl ist; **gekennzeichnet durch** Einstellen eines Proportionalitätskoeffizienten, der jeder Grenze entspricht, auf Basis der Anzahl T+1 von Abgriffkoeffizienten an jeder Grenze und Berechnen eines Produkts aus der Energiegesamtmenge und dem Proportionalitätskoeffizienten, der jeder Grenze entspricht;

Vergleichen von Energie von jedem von T+1 Abgriffkoeffizienten an einer ersten Grenze der Vielzahl von Grenzen mit dem Produkt, das der ersten Grenze entspricht, Vergleichen einer Energiegesamtmenge einer Anzahl T von Abgriffkoeffizienten an einer zweiten Grenze der Vielzahl von Grenzen mit dem Produkt, das der zweiten Grenze entspricht, Vergleichen von Energie eines (T+1)-ten Abgriffkoeffizienten von der zweiten Grenze mit dem Produkt, das der zweiten Grenze entspricht und Erzeugen eines Vergleichsergebnisses und

Anpassen einer Mittenposition in der Vielzahl von Abgriffkoeffizienten gemäß dem Vergleichsergebnis.

2. Verfahren nach Anspruch 1, wobei der Proportionalitätskoeffizient einen ersten Proportionalitätskoeffizienten, einen zweiten Proportionalitätskoeffizienten, einen dritten Proportionalitätskoeffizienten und einen vierten Proportionalitätskoeffizienten umfasst; das Produkt umfasst ein erstes Produkt aus der Energiegesamtmenge und dem ersten Proportionalitätskoeffizienten, ein zweites Produkt aus der Energiegesamtmenge und dem zweiten Proportionalitätskoeffizienten, ein drittes Produkt aus der Energiegesamtmenge und dem dritten Proportionalitätskoeffizienten und ein viertes Produkt aus der Energiegesamtmenge und dem vierten Proportionalitätskoeffizienten;

wobei das Anpassen der Mittenposition in der Vielzahl von Abgriffkoeffizienten gemäß dem Vergleichsergebnis Folgendes umfasst:

Bestimmen, dass Energie von mindestens einem von T aufeinanderfolgenden Abgriffkoeffizienten, beginnend bei einem ersten Abgriffkoeffizienten an der ersten Grenze, größer ist als das erste Produkt oder Energie eines (T+1)-ten Abgriffkoeffizienten an der ersten Grenze größer ist als das vierte Produkt;

Bestimmen, dass eine Energiegesamtmenge von T aufeinanderfolgenden Abgriffkoeffizienten, beginnend bei einem (N+1-T)-ten Abgriffkoeffizienten an der zweiten Grenze, kleiner ist als das zweite Produkt und Energie eines (N-T)-ten Abgriffkoeffizienten an der zweiten Grenze kleiner ist als das dritte Produkt, wobei N eine Anzahl von Abgriffkoeffizienten in der Abgriffkoeffizientenwarteschlange ist; und

Anpassen der Mittenposition in der Vielzahl von Abgriffkoeffizienten.

3. Verfahren nach Anspruch 2, wobei das Anpassen der Mittenposition in der Vielzahl von Abgriffkoeffizienten Folgendes umfasst:
Bewegen der T Abgriffkoeffizienten an der zweiten Grenze zur ersten Grenze der Abgriffkoeffizientenwarteschlange.

4. Verfahren nach Anspruch 1, wobei der Proportionalitätskoeffizient einen ersten Proportionalitätskoeffizienten, einen zweiten Proportionalitätskoeffizienten, einen dritten Proportionalitätskoeffizienten und einen vierten Proportionalitätskoeffizienten umfasst; das Produkt umfasst ein erstes Produkt aus der Energiegesamtmenge und dem ersten Proportionalitätskoeffizienten, ein zweites Produkt aus der Energiegesamtmenge und dem zweiten Proportionalitätskoeffizienten, ein drittes Produkt aus der Energiegesamtmenge und dem dritten Proportionalitätskoeffizienten und ein viertes Produkt aus der Energiegesamtmenge und dem vierten Proportionalitätskoeffizienten; wobei das Anpassen der Mittenposition in der Vielzahl von Abgriffkoeffizienten gemäß dem Vergleichsergebnis Folgendes umfasst:

Bestimmen, dass Energie von mindestens einem von T aufeinanderfolgenden Abgriffkoeffizienten, beginnend bei einem (N+1-T)-ten Abgriffkoeffizienten an der zweiten Grenze, größer ist als das erste Produkt oder Energie eines (N-T)-ten Abgriffkoeffizienten an der zweiten Grenze größer ist als das vierte Produkt;

Bestimmen, dass eine Energiegesamtmenge von T aufeinanderfolgenden Abgriffkoeffizienten, beginnend bei einem ersten Abgriffkoeffizienten an der ersten Grenze, kleiner ist als das zweite Produkt und Energie eines (T-1)-ten Abgriffkoeffizienten an der ersten Grenze kleiner ist als das dritte Produkt, wobei N eine Anzahl von Abgriffkoeffizienten in der Abgriffkoeffizientenwarteschlange ist; und

Anpassen der Mittenposition in der Vielzahl von Abgriffkoeffizienten.

5. Verfahren nach Anspruch 4, wobei das Anpassen der Mittenposition in der Vielzahl von Abgriffkoeffizienten Folgendes umfasst:
Bewegen der T Abgriffkoeffizienten an der ersten Grenze zur zweiten Grenze der Abgriffkoeffizientenwarteschlange.

6. Verfahren nach Anspruch 1, wobei der Proportionalitätskoeffizient einen ersten Proportionalitätskoeffizienten, einen zweiten Proportionalitätskoeffizienten, einen dritten Proportionalitätskoeffizienten und einen vierten Proportionalitätskoeffizienten umfasst; das Produkt umfasst ein erstes Produkt aus der Energiegesamtmenge und dem ersten Proportionalitätskoeffizienten, ein zweites Produkt aus der Energiegesamtmenge und dem zweiten Proportionalitätskoeffizienten, ein drittes Produkt aus der Energiegesamtmenge und dem dritten Proportionalitätskoeffizienten und ein viertes Produkt aus der Energiegesamtmenge und dem vierten Proportionalitätskoeffizienten;
wobei das Verfahren ferner Folgendes umfasst:

Bestimmen, dass Energie von mindestens einem von T aufeinanderfolgenden Abgriffkoeffizienten, beginnend bei einem ersten Abgriffkoeffizienten an der ersten Grenze, größer ist als das erste Produkt oder Energie eines (T+1)-ten Abgriffkoeffizienten an der ersten Grenze größer ist als das vierte Produkt oder dass Energie von mindestens einem von T aufeinanderfolgenden Abgriffkoeffizienten, beginnend bei einem (N+1-T)-ten Abgriffkoeffizienten an der zweiten Grenze, größer ist als das erste Produkt oder Energie eines (N-T)-ten Abgriffkoeffizienten an der zweiten Grenze größer ist als das vierte Produkt;

wobei in einem Fall des Bestimmens, dass Energie von mindestens einem von T aufeinanderfolgenden Abgriffkoeffizienten, beginnend beim ersten Abgriffkoeffizienten an der ersten Grenze, größer ist als das erste Produkt oder Energie des (T+1)-ten Abgriffkoeffizienten an der ersten Grenze größer ist als das vierte Produkt, das Verfahren ferner Folgendes umfasst:

Bestimmen, dass eine Energiegesamtmenge der T aufeinanderfolgenden Abgriffkoeffizienten, beginnend beim (N+1-T)-ten Abgriffkoeffizienten an der zweiten Grenze,

kleiner ist als das zweite Produkt und die Energie des (N-T)-ten Abgriffkoeffizienten an der zweiten Grenze kleiner ist als das dritte Produkt, wobei N eine Anzahl von Abgriffkoeffizienten in der Abgriffkoeffizientenwarteschlange ist; und

Bewegen der T Abgriffkoeffizienten an der zweiten Grenze zur ersten Grenze der Abgriffkoeffizientenwarteschlange;

oder in einem Fall des Bestimmens, dass Energie von mindestens einem von T aufeinanderfolgenden Abgriffkoeffizienten, beginnend beim (N+1-T)-ten Abgriffkoeffizienten an der zweiten Grenze, größer ist als das erste Produkt oder Energie des (N-T)-ten Abgriffkoeffizienten an der zweiten Grenze größer ist als das vierte Produkt, umfasst das Verfahren ferner Folgendes:

Bestimmen, dass eine Energiegesamtmenge der T aufeinanderfolgenden Abgriffkoeffizienten, beginnend beim ersten Abgriffkoeffizienten an der ersten Grenze, kleiner ist als das zweite Produkt und die Energie des (T+1)-ten Abgriffkoeffizienten an der ersten Grenze kleiner ist als das dritte Produkt, wobei N die Anzahl von Abgriffkoeffizienten in der Abgriffkoeffizientenwarteschlange ist; und Bewegen der T Abgriffkoeffizienten an der ersten Grenze zur zweiten Grenze der Abgriffkoeffizientenwarteschlange.

7. Verfahren nach Anspruch 3, 5 oder 6, das ferner Folgendes umfasst:

in Reaktion auf das Bestimmen, dass der adaptiver Entzerrer in einen Konvergenzzustand eintritt, Einstellen des ersten Proportionalitätskoeffizienten auf einen ersten Wert, wobei der erste Wert größer ist als ein Anfangswert des ersten proportionalen Koeffizienten; Einstellen des zweiten Proportionalitätskoeffizienten auf einen zweiten Wert, wobei der zweite Wert größer ist als ein Anfangswert des zweiten proportionalen Koeffizienten; Einstellen des dritten Proportionalitätskoeffizienten auf einen dritten Wert, wobei der dritte Wert größer ist als ein Anfangswert des dritten proportionalen Koeffizienten; und Einstellen des vierten Proportionalitätskoeffizienten auf einen vierten Wert, wobei der vierte Wert größer ist als ein Anfangswert des vierten proportionalen Koeffizienten.

8. Abgriffkoeffizientenanpassungsvorrichtung, die Folgendes umfasst:

ein Erfassungsmodul, das dazu ausgelegt ist, Energie einer Anzahl T+1 von Abgriffkoeffizienten an jeder Grenze einer Vielzahl von Grenzen in einer Abgriffkoeffizientenwarteschlange einer Vielzahl von Abgriffkoeffizienten eines adaptiven Entzerrers zu erfassen und eine Energiegesamtmenge der Vielzahl von Abgriffkoeffizienten in der Abgriffkoeffizientenwarteschlange zu berechnen, wobei T eine voreingestellte Anpassungsschrittgröße der Vielzahl von Abgriffkoeffizienten des adaptiven Entzerrers und T eine positive Ganzzahl ist; **gekennzeichnet durch**

ein Energieproportionalitätsberechnungsmodul, das dazu ausgelegt ist, einen Proportionalitätskoeffizienten, der jeder Grenze entspricht, auf Basis der Anzahl T+1 von Abgriffkoeffizienten an jeder Grenze einzustellen und ein Produkt aus der Energiegesamtmenge und dem Proportionalitätskoeffizienten, der jeder Grenze entspricht, zu berechnen; ein Vergleichsmodul, das dazu ausgelegt ist, Energie von jedem von T+1 Abgriffkoeffizienten an einer ersten Grenze der Vielzahl von Grenzen mit dem Produkt, das der ersten Grenze entspricht, zu vergleichen, eine Energiegesamtmenge einer Anzahl T von Abgriffkoeffizienten an einer zweiten Grenze der Vielzahl von Grenzen mit dem Produkt, das der zweiten Grenze entspricht, zu vergleichen, Energie eines (T+1)-ten Abgriffkoeffizienten von der zweiten Grenze mit dem Produkt, das der zweiten Grenze entspricht, zu vergleichen und ein Vergleichsergebnis zu erzeugen und

ein Anpassungsmodul, das dazu ausgelegt ist, eine Mittenposition in der Vielzahl von Abgriffkoeffizienten gemäß dem Vergleichsergebnis anzupassen.

9. Vorrichtung nach Anspruch 8, wobei der Proportionalitätskoeffizient einen ersten Proportionalitätskoeffizienten, einen zweiten Proportionalitätskoeffizienten, einen dritten Proportionalitätskoeffizienten und einen vierten Proportionalitätskoeffizienten umfasst;

das Produkt umfasst ein erstes Produkt aus der Energiegesamtmenge und dem ersten Proportionalitätskoeffizienten, ein zweites Produkt aus der Energiegesamtmenge und dem zweiten Proportionalitätskoeffizienten, ein drittes Produkt aus der Energiegesamtmenge und dem dritten Proportionalitätskoeffizienten und ein viertes Produkt aus der Energiegesamtmenge und dem vierten Proportionalitätskoeffizienten;

wobei das Anpassungsmodul zu Folgendem ausgelegt ist:

Bestimmen, dass Energie von mindestens einem von T aufeinanderfolgenden Abgriffkoeffizienten, beginnend bei einem ersten Abgriffkoeffizienten an der ersten Grenze, größer ist als das erste Produkt oder Energie eines (T+1)-ten Abgriffkoeffizienten an der ersten Grenze größer ist als das vierte Produkt;

Bestimmen, dass eine Energiegesamtmenge von T aufeinanderfolgenden Abgriffkoeffizienten, beginnend bei einem (N+1-T)-ten Abgriffkoeffizienten an der zweiten Grenze, kleiner ist als das zweite Produkt und Energie eines (N-T)-ten Abgriffkoeffizienten an der zweiten Grenze kleiner ist als das dritte Produkt, wobei N eine Anzahl von Abgriffkoeffizienten in der Abgriffkoeffizientenwarteschlange ist; und

Anpassen der Mittenposition in der Vielzahl von Abgriffkoeffizienten.

10. Vorrichtung nach Anspruch 9, wobei das Anpassen der Mittenposition in der Vielzahl von Abgriffkoeffizienten das Bewegen der T Abgriffkoeffizienten an der zweiten Grenze zur ersten Grenze der Abgriffkoeffizientenwarteschlange umfasst.

11. Vorrichtung nach Anspruch 8, wobei der Proportionalitätskoeffizient einen ersten Proportionalitätskoeffizienten, einen zweiten Proportionalitätskoeffizienten, einen dritten Proportionalitätskoeffizienten und einen vierten Proportionalitätskoeffizienten umfasst;

das Produkt umfasst ein erstes Produkt aus der Energiegesamtmenge und dem ersten Proportionalitätskoeffizienten, ein zweites Produkt aus der Energiegesamtmenge und dem zweiten Proportionalitätskoeffizienten, ein drittes Produkt aus der Energiegesamtmenge und dem dritten Proportionalitätskoeffizienten und ein viertes Produkt aus der Energiegesamtmenge und dem vierten Proportionalitätskoeffizienten;

wobei das Anpassungsmodul zu Folgendem ausgelegt ist:

Bestimmen, dass Energie von mindestens einem von T aufeinanderfolgenden Abgriffkoeffizienten, beginnend bei einem (N+1-T)-ten Abgriffkoeffizienten an der zweiten Grenze, größer ist als das erste Produkt oder Energie eines (N-T)-ten Abgriffkoeffizienten an der zweiten Grenze größer ist als das vierte Produkt;

Bestimmen, dass eine Energiegesamtmenge von T aufeinanderfolgenden Abgriffkoeffizienten, beginnend bei einem ersten Abgriffkoeffizienten an der ersten Grenze, kleiner ist als das zweite Produkt und Energie eines (T-1)-ten Abgriffkoeffizienten an der ersten Grenze kleiner ist als das dritte Produkt, wobei N eine Anzahl von Abgriffkoeffizienten in der Abgriffkoeffizientenwarteschlange ist; und

Anpassen der Mittenposition in der Vielzahl von Abgriffkoeffizienten.

12. Vorrichtung nach Anspruch 11, wobei das Anpassen der Mittenposition in der Vielzahl von Abgriffkoeffizienten das Bewegen der T Abgriffkoeffizienten an der ersten Grenze zur zweiten Grenze der Abgriffkoeffizientenwarteschlange umfasst.

13. Vorrichtung nach Anspruch 8, wobei der Proportionalitätskoeffizient einen ersten Proportionalitätskoeffizienten, einen zweiten Proportionalitätskoeffizienten, einen dritten Proportionalitätskoeffizienten und einen vierten Proportionalitätskoeffizienten umfasst;

das Produkt umfasst ein erstes Produkt aus der Energiegesamtmenge und dem ersten Proportionalitätskoeffizienten, ein zweites Produkt aus der Energiegesamtmenge und dem zweiten Proportionalitätskoeffizienten, ein drittes Produkt aus der Energiegesamtmenge und dem dritten Proportionalitätskoeffizienten und ein viertes Produkt aus der Energiegesamtmenge und dem vierten Proportionalitätskoeffizienten;

wobei das Anpassungsmodul zu Folgendem ausgelegt ist:

Bestimmen, dass Energie von mindestens einem von T aufeinanderfolgenden Abgriffkoeffizienten, beginnend bei einem ersten Abgriffkoeffizienten an der ersten Grenze, größer ist als das erste Produkt oder Energie eines (T+1)-ten Abgriffkoeffizienten an der ersten Grenze größer ist als das vierte Produkt oder dass Energie von mindestens einem von T aufeinanderfolgenden Abgriffkoeffizienten, beginnend bei einem (N+1-T)-ten Abgriffkoeffizienten an der zweiten Grenze, größer ist als das erste Produkt oder Energie eines (N-T)-ten Abgriffkoeffizienten an der zweiten Grenze größer ist als das vierte Produkt;

wobei in einem Fall des Bestimmens, dass Energie von mindestens einem von T aufeinanderfolgenden Abgriffkoeffizienten, beginnend beim ersten Abgriffkoeffizienten an der ersten Grenze, größer ist als das erste Produkt oder Energie des (T+1)-ten Abgriffkoeffizienten an der ersten Grenze größer ist als das vierte Produkt, das Anpassungsmodul ferner zu Folgendem ausgelegt ist:

Bestimmen, dass eine Energiegesamtmenge der T aufeinanderfolgenden Abgriffkoeffizienten, beginnend beim (N+1-T)-ten Abgriffkoeffizienten an der zweiten Grenze, kleiner ist als das zweite Produkt und die Energie des (N-T)-ten Abgriffkoeffizienten an der zweiten Grenze kleiner ist als das dritte Produkt, wobei N eine Anzahl von Abgriffkoeffizienten in der Abgriffkoeffizientenwarteschlange ist; und

Bewegen der T Abgriffkoeffizienten an der zweiten Grenze zur ersten Grenze der Abgriffkoeffizientenwarteschlange;

oder in einem Fall des Bestimmens, dass Energie von mindestens einem von T aufeinanderfolgenden Abgriffkoeffizienten, beginnend beim (N+1-T)-ten Abgriffkoeffizienten an der zweiten Grenze, größer ist als das erste Produkt oder Energie des (N-T)-ten Abgriffkoeffizienten an der zweiten Grenze größer ist als das vierte Produkt, ist das Anpassungsmodul ferner zu Folgendem ausgelegt:

Bestimmen, dass eine Energiegesamtmenge der T aufeinanderfolgenden Abgriffkoeffizienten, beginnend beim ersten Abgriffkoeffizienten an der ersten Grenze, kleiner ist als das zweite Produkt und die Energie des (T+1)-ten Abgriffkoeffizienten an der ersten Grenze kleiner ist als das dritte Produkt, wobei N die Anzahl von Abgriffkoeffizienten in der Abgriffkoeffizientenwarteschlange ist; und

Bewegen der T Abgriffkoeffizienten an der ersten Grenze zur zweiten Grenze der Abgriffkoeffizientenwarteschlange.

14. Vorrichtung nach Anspruch 10, 12 oder 13, wobei das Energieproportionalitätsberechnungsmodul ferner zu Folgendem ausgelegt ist:

in Reaktion auf das Bestimmen, dass der adaptiver Entzerrer in einen Konvergenzzustand eintritt, Einstellen des ersten Proportionalitätskoeffizienten auf einen ersten Wert, wobei der erste Wert größer ist als ein Anfangswert des ersten proportionalen Koeffizienten;

Einstellen des zweiten Proportionalitätskoeffizienten auf einen zweiten Wert, wobei der zweite Wert größer ist als ein Anfangswert des zweiten proportionalen Koeffizienten;

Einstellen des dritten Proportionalitätskoeffizienten auf einen dritten Wert, wobei der dritte Wert größer ist als ein Anfangswert des dritten proportionalen Koeffizienten; und

Einstellen des vierten Proportionalitätskoeffizienten auf einen vierten Wert, wobei der vierte Wert größer ist als ein Anfangswert des vierten proportionalen Koeffizienten.

15. Computerspeichermedium, auf dem computerausführbare Anweisungen gespeichert sind, die dazu ausgelegt sind, das Abgriffkoeffizientenanpassungsverfahren nach einem der Ansprüche 1 bis 7 auszuführen.

## Revendications

1. Procédé d'ajustement de coefficient de prise, comprenant :

l'acquisition d'une énergie d'un nombre T+1 de coefficients de prise à chaque limite d'une pluralité de limites dans une queue de coefficients de prise d'une pluralité de coefficients de prise d'un égaliseur adaptatif, et le calcul d'une quantité totale d'énergie de la pluralité de coefficients de prise dans la queue de coefficients de prise, dans lequel T est une taille de pas d'ajustement prédéfinie de la pluralité de coefficients de prise de l'égaliseur adaptatif et T est un entier naturel ;
**caractérisé par**
le réglage d'un coefficient de proportionnalité correspondant à la chaque limite sur la base du nombre T+1 de coefficients de prise à la chaque limite, et le calcul d'un produit de la quantité totale d'énergie et du coefficient de proportionnalité correspondant à la chaque limite ;
la comparaison d'une énergie de chacun de T+1 coefficients de prise à une première limite de la pluralité de limites avec le produit correspondant à la première limite, la comparaison d'une quantité totale d'énergie d'un nombre T de coefficients de prise à une seconde limite de la pluralité de limites avec le produit correspondant à la seconde limite, la comparaison d'une énergie d'un (T+1)-ème coefficient de prise depuis la seconde limite avec le produit correspondant à la seconde limite, et la production d'un résultat de comparaison ; et
l'ajustement d'une position de centre dans la pluralité de coefficients de prise en fonction du résultat de comparaison.

2. Procédé selon la revendication 1, dans lequel le coefficient de proportionnalité comprend un premier coefficient de proportionnalité, un deuxième coefficient de proportionnalité, un troisième coefficient de proportionnalité et un quatrième coefficient de proportionnalité ;
le produit comprend un premier produit de la quantité totale d'énergie et du premier coefficient de proportionnalité, un deuxième produit de la quantité totale d'énergie et du deuxième coefficient de proportionnalité, un troisième produit de la quantité totale d'énergie et du troisième coefficient de proportionnalité, et un quatrième produit de la quantité totale d'énergie et du quatrième coefficient de proportionnalité ;
dans lequel l'ajustement de la position de centre dans la pluralité de coefficients de prise en fonction du résultat de comparaison comprend :

le fait de déterminer qu'une énergie d'au moins l'un de T coefficients de prise successifs commençant par un premier coefficient de prise à la première limite est supérieure au premier produit ou une énergie d'un (T+1)-ème coefficient de prise à la première limite est supérieure au quatrième produit ;

le fait de déterminer qu'une quantité totale d'énergie de T coefficients de prise successifs commençant par un (N+1-T)-ème coefficient de prise à la seconde limite est inférieure au deuxième produit et une énergie d'un (N-T)-ème coefficient de prise à la seconde limite est inférieure au troisième produit, dans lequel N est un nombre de coefficients de prise dans la queue de coefficients de prise ; et

l'ajustement de la position de centre dans la pluralité des coefficients de prise.

**3.** Procédé selon la revendication 2, dans lequel l'ajustement de la position de centre dans la pluralité de coefficients de prise comprend :
le déplacement des T coefficients de prise à la seconde limite vers la première limite de la queue de coefficients de prise.

**4.** Procédé selon la revendication 1, dans lequel le coefficient de proportionnalité comprend un premier coefficient de proportionnalité, un deuxième coefficient de proportionnalité, un troisième coefficient de proportionnalité et un quatrième coefficient de proportionnalité ;
le produit comprend un premier produit de la quantité totale d'énergie et du premier coefficient de proportionnalité, un deuxième produit de la quantité totale d'énergie et du deuxième coefficient de proportionnalité, un troisième produit de la quantité totale d'énergie et du troisième coefficient de proportionnalité, et un quatrième produit de la quantité totale d'énergie et du quatrième coefficient de proportionnalité ;
dans lequel l'ajustement de la position de centre dans la pluralité de coefficients de prise en fonction du résultat de comparaison comprend :

le fait de déterminer qu'une énergie d'au moins l'un de T coefficients de prise successifs commençant par un (N+1-T)-ème coefficient de prise à la seconde limite est supérieure au premier produit, ou une énergie d'un (N-T)-ème coefficient de prise à la seconde limite est supérieure au quatrième produit ;

le fait de déterminer qu'une quantité totale d'énergie de T coefficients de prise successifs commençant par un premier coefficient de prise à la première limite est inférieure au deuxième produit, et une énergie d'un (T+1)-ème coefficient de prise à la première limite est inférieure au troisième produit, dans lequel N est un nombre de coefficients de prise dans la queue de coefficients de prise ; et

l'ajustement de la position de centre dans la pluralité des coefficients de prise.

**5.** Procédé selon la revendication 4, dans lequel l'ajustement de la position de centre dans la pluralité de coefficients de prise comprend :
le déplacement des T coefficients de prise à la première limite vers la seconde limite de la queue de coefficients de prise.

**6.** Procédé selon la revendication 1, dans lequel le coefficient de proportionnalité comprend un premier coefficient de proportionnalité, un deuxième coefficient de proportionnalité, un troisième coefficient de proportionnalité et un quatrième coefficient de proportionnalité ;
le produit comprend un premier produit de la quantité totale d'énergie et du premier coefficient de proportionnalité, un deuxième produit de la quantité totale d'énergie et du deuxième coefficient de proportionnalité, un troisième produit de la quantité totale d'énergie et du troisième coefficient de proportionnalité, et un quatrième produit de la quantité totale d'énergie et du quatrième coefficient de proportionnalité ;
dans lequel le procédé comprend en outre :

le fait de déterminer qu'une énergie d'au moins l'un de T coefficients de prise successifs commençant par un premier coefficient de prise à la première limite est supérieure au premier produit, ou une énergie d'un (T+1) - ème coefficient de prise à la première limite est supérieure au quatrième produit ; ou qu'une énergie d'au moins l'un de T coefficients de prise successifs commençant par un (N+1-T)-ème coefficient de prise à la seconde limite est supérieure au premier produit, ou une énergie d'un (N-T)-ème coefficient de prise à la seconde limite est supérieure au quatrième produit ;

dans lequel dans le cas où le fait de déterminer qu'une énergie d'au moins l'un de T coefficients de prise successifs commençant par le premier coefficient de prise à la première limite est supérieure au premier produit ou une énergie du (T+1)-ème coefficient de prise à la première limite est supérieure au quatrième produit, le procédé comprend en outre :

le fait de déterminer qu'une quantité totale d'énergie des T coefficients de prise successifs commençant par le (N+1-T)-ème coefficient de prise à la seconde limite est inférieure au deuxième produit, et l'énergie du (N-T)-ème coefficient de prise à la seconde limite est inférieure au troisième produit, dans lequel N est un nombre de coefficients de prise dans la queue de coefficients de prise ; et

le déplacement des T coefficients de prise à la seconde limite vers la première limite de la queue de coefficients de prise ;

ou, dans le cas où le fait de déterminer qu'une énergie d'au moins l'un de T coefficients de prise successifs commençant par le (N+1-T)-ème coefficient de prise à la seconde limite est supérieure au premier produit ou une énergie du (N-T)-ème coefficient de prise à la seconde limite est supérieure au quatrième produit, le procédé comprend en outre :

le fait de déterminer qu'une quantité totale d'énergie des T coefficients de prise successifs commençant par le premier coefficient de prise à la première limite est inférieure au deuxième produit et l'énergie du (T+1)-ème coefficient de prise à la première limite est inférieure au troisième produit, dans lequel N est le nombre de coefficients de prise dans la queue de coefficients de prise ; et

le déplacement des T coefficients de prise à la première limite vers la seconde limite de la queue de coefficients de prise.

7. Procédé selon la revendication 3, 5 ou 6, comprenant en outre :

en réponse au fait de déterminer que l'égaliseur adaptatif entre dans un état de convergence, le réglage du premier coefficient de proportionnalité à une première valeur, dans lequel la première valeur est supérieure à une valeur initiale du premier coefficient proportionnel ;

le réglage du deuxième coefficient de proportionnalité à une deuxième valeur, dans lequel la deuxième valeur est supérieure à une valeur initiale du deuxième coefficient proportionnel ;

le réglage du troisième coefficient de proportionnalité à une troisième valeur, dans lequel la troisième valeur est supérieure à une valeur initiale du troisième coefficient proportionnel ; et

le réglage du quatrième coefficient de proportionnalité à une quatrième valeur, dans lequel la quatrième valeur est supérieure à une valeur initiale du quatrième coefficient proportionnel.

8. Dispositif d'ajustement de coefficient de prise, comprenant :

un module d'acquisition, qui est configuré pour acquérir une énergie d'un nombre T+1 de coefficients de prise à chaque limite d'une pluralité de limites dans une queue de coefficients de prise d'une pluralité de coefficients de prise d'un égaliseur adaptatif, et calculer une quantité totale d'énergie de la pluralité de coefficients de prise dans la queue de coefficients de prise, dans lequel T est une taille de pas d'ajustement prédéfinie de la pluralité de coefficients de prise de l'égaliseur adaptatif et T est un entier naturel ; **caractérisé par**
un module de calcul de proportionnalité d'énergie, qui est configuré pour régler un coefficient de proportionnalité correspondant à la chaque limite sur la base du nombre T+1 de coefficients de prise à la chaque limite, et calculer un produit de la quantité totale d'énergie et du coefficient de proportionnalité correspondant à la chaque limite ;
un module de comparaison, qui est configuré pour comparer une énergie de chacun de T+1 coefficients de prise à une première limite de la pluralité de limites avec le produit correspondant à la première limite, comparer une quantité totale d'énergie d'un nombre T de coefficients de prise à une seconde limite de la pluralité de limites avec le produit correspondant à la seconde limite, comparer une énergie d'un (T+1)-ème coefficient de prise depuis la seconde limite avec le produit correspondant à la seconde limite, et produire un résultat de comparaison ; et
un module d'ajustement, qui est configuré pour ajuster une position de centre dans la pluralité de coefficients de prise en fonction du résultat de comparaison.

9. Dispositif selon la revendication 8, dans lequel le coefficient de proportionnalité comprend un premier coefficient de proportionnalité, un deuxième coefficient de proportionnalité, un troisième coefficient de proportionnalité et un quatrième coefficient de proportionnalité ;
le produit comprend un premier produit de la quantité totale d'énergie et du premier coefficient de proportionnalité, un deuxième produit de la quantité totale d'énergie et du deuxième coefficient de proportionnalité, un troisième produit de la quantité totale d'énergie et du troisième coefficient de proportionnalité, et un quatrième produit de la quantité totale d'énergie et du quatrième coefficient de proportionnalité ;
dans lequel le module d'ajustement est configuré pour :

déterminer qu'une énergie d'au moins l'un de T coefficients de prise successifs commençant par un premier coefficient de prise à la première limite est supérieure au premier produit ou une énergie d'un (T+1)-ème coefficient de prise à la première limite est supérieure au quatrième produit ;

déterminer qu'une quantité totale d'énergie de T coefficients de prise successifs commençant par un (N+1-T)-ème coefficient de prise à la seconde limite est inférieure au deuxième produit et une énergie d'un (N-T)-ème coefficient de prise à la seconde limite est inférieure au troisième produit, dans lequel N est un nombre de coefficients de prise dans la queue de coefficients de prise ; et

ajuster la position de centre dans la pluralité des coefficients de prise.

10. Dispositif selon la revendication 9, dans lequel l'ajustement de la position de centre dans la pluralité de coefficients de prise comprend le déplacement des T coefficients de prise à la seconde limite vers la première limite de la queue de coefficients de prise.

11. Dispositif selon la revendication 8, dans lequel le coefficient de proportionnalité comprend un premier coefficient de proportionnalité, un deuxième coefficient de proportionnalité, un troisième coefficient de proportionnalité et un quatrième coefficient de proportionnalité ;

le produit comprend un premier produit de la quantité totale d'énergie et du premier coefficient de proportionnalité, un deuxième produit de la quantité totale d'énergie et du deuxième coefficient de proportionnalité, un troisième produit de la quantité totale d'énergie et du troisième coefficient de proportionnalité, et un quatrième produit de la quantité totale d'énergie et du quatrième coefficient de proportionnalité ;

dans lequel le module d'ajustement est configuré pour :

déterminer qu'une énergie d'au moins l'un de T coefficients de prise successifs commençant par un (N+1-T)-ème coefficient de prise à la seconde limite est supérieure au premier produit, ou une énergie d'un (N-T)-ème coefficient de prise à la seconde limite est supérieure au quatrième produit ;

déterminer qu'une quantité totale d'énergie de T coefficients de prise successifs commençant par un premier coefficient de prise à la première limite est inférieure au deuxième produit, et une énergie d'un (T+1)-ème coefficient de prise à la première limite est inférieure au troisième produit, dans lequel N est un nombre de coefficients de prise dans la queue de coefficients de prise ; et

ajuster la position de centre dans la pluralité des coefficients de prise.

12. Dispositif selon la revendication 11, dans lequel l'ajustement de la position de centre dans la pluralité de coefficients de prise comprend le déplacement des T coefficients de prise à la première limite vers la seconde limite de la queue de coefficients de prise.

13. Dispositif selon la revendication 8, dans lequel le coefficient de proportionnalité comprend un premier coefficient de proportionnalité, un deuxième coefficient de proportionnalité, un troisième coefficient de proportionnalité et un quatrième coefficient de proportionnalité ;

le produit comprend un premier produit de la quantité totale d'énergie et du premier coefficient de proportionnalité, un deuxième produit de la quantité totale d'énergie et du deuxième coefficient de proportionnalité, un troisième produit de la quantité totale d'énergie et du troisième coefficient de proportionnalité, et un quatrième produit de la quantité totale d'énergie et du quatrième coefficient de proportionnalité ;

dans lequel le module d'ajustement est configuré pour :

déterminer qu'une énergie d'au moins l'un de T coefficients de prise successifs commençant par un premier coefficient de prise à la première limite est supérieure au premier produit, ou une énergie d'un (T+1) - ème coefficient de prise à la première limite est supérieure au quatrième produit ; ou qu'une énergie d'au moins l'un de T coefficients de prise successifs commençant par un (N+1-T)-ème coefficient de prise à la seconde limite est supérieure au premier produit, ou une énergie d'un (N-T)-ème coefficient de prise à la seconde limite est supérieure au quatrième produit ;

dans lequel dans le cas où le fait de déterminer qu'une énergie d'au moins l'un de T coefficients de prise successifs commençant par le premier coefficient de prise à la première limite est supérieure au premier produit ou une énergie du (T+1)-ème coefficient de prise à la première limite est supérieure au quatrième produit, le module d'ajustement est en outre configuré pour :

déterminer qu'une quantité totale d'énergie des T coefficients de prise successifs commençant par le (N+1-T)-ème coefficient de prise à la seconde limite est inférieure au deuxième produit, et l'énergie du (N-T)-ème coefficient de prise à la seconde limite est inférieure au troisième produit, dans lequel N est un nombre de coefficients de prise dans la queue de coefficients de prise ; et déplacer les T coefficients de prise à la seconde limite vers la première limite de la queue de coefficients de prise ;

ou, dans le cas où le fait de déterminer qu'une énergie d'au moins l'un de T coefficients de prise successifs commençant par le (N+1-T)-ème coefficient de prise à la seconde limite est supérieure au premier produit ou une énergie du (N-T)-ème coefficient de prise à la seconde limite est supérieure au quatrième produit, le module d'ajustement est en outre configuré pour :

déterminer qu'une quantité totale d'énergie des T coefficients de prise successifs commençant par le premier coefficient de prise à la première limite est inférieure au deuxième produit et l'énergie du (T+1)-ème coefficient de prise à la première limite est inférieure au troisième produit, dans lequel N est le nombre de coefficients de prise dans la queue de coefficients de prise ; et déplacer les T coefficients de prise à la première limite vers la seconde limite de la queue de coefficients de prise.

14. Dispositif selon la revendication 10, 12 ou 13, dans lequel le module de calcul de proportionnalité d'énergie est en outre configuré pour :

en réponse au fait de déterminer que l'égaliseur adaptatif entre dans un état de convergence, régler le premier coefficient de proportionnalité à une première valeur, dans lequel la première valeur est supérieure à une valeur initiale du premier coefficient proportionnel ; régler le deuxième coefficient de proportionnalité à une deuxième valeur, dans lequel la deuxième valeur est supérieure à une valeur initiale du deuxième coefficient proportionnel ; régler le troisième coefficient de proportionnalité à une troisième valeur, dans lequel la troisième valeur est supérieure à une valeur initiale du troisième coefficient proportionnel ; et régler le quatrième coefficient de proportionnalité à une quatrième valeur, dans lequel la quatrième valeur est supérieure à une valeur initiale du quatrième coefficient proportionnel.

15. Support de stockage informatique, stockant des instructions exécutables par ordinateur configurées pour exécuter le procédé d'ajustement de coefficient de prise selon l'une quelconque des revendications 1 à 7.

EP 3 509 257 B1

**FIG. 1**

| Acquire energy of a number T+1 of tap coefficients at each boundary of a plurality of boundaries in a tap coefficient queue of a plurality of tap coefficients of an adaptive equalizer, and calculate a total amount of energy of the plurality of tap coefficients in the tap coefficient queue | 100 |

| Set a proportionality coefficient corresponding to the each boundary is set based on the number T+1 of tap coefficients at the each boundary, and calculate a product of the total amount of energy and the proportionality coefficient corresponding to the each boundary | 200 |

| Compare energy of each of T+1 tap coefficients at a first boundary of the plurality of boundaries with the product corresponding to the first boundary, compared a total amount of energy of a number T of tap coefficients at a second boundary of the plurality of boundaries with the product corresponding to the second boundary, compare energy of a (T+1)-th tap coefficient from the second boundary with the product corresponding to the second boundary, and generate a comparison result | 300 |

| Adjust a center position in the plurality of tap coefficients according to the comparison result | 400 |

**FIG. 2**

26

```
                    ┌─────────┐
                    │  Start  │
                    └────┬────┘
                         │
                         ▼
                    ╱ Satisfy a ╲
         Y    ◄────╱ condition 1 ╲────►   N
         │        ╲             ╱         │
         │         ╲           ╱          │
         ▼                                ▼
  ┌───────────┐                      ╱ Satisfy a ╲
  │ Adjust the│            Y   ◄────╱ condition 2 ╲────►  N
  │  center   │            │        ╲            ╱        │
  │ rightward │            │         ╲          ╱         │
  └───────────┘            ▼                               ▼
                    ┌───────────┐                   ┌──────────────┐
                    │ Adjust the│                   │ No adjustment│
                    │  center   │                   └──────────────┘
                    │  leftward │
                    └───────────┘
```

**FIG. 3**

```
                    ┌─────────┐
                    │  Start  │
                    └────┬────┘
                         │
                         ▼
                    ╱ Satisfy a ╲
         Y    ◄────╱ condition 3 ╲────►   N
         │        ╲             ╱         │
         │         ╲           ╱          │
         ▼                                ▼
  ┌───────────┐                      ╱ Satisfy a ╲
  │ Adjust the│            Y   ◄────╱ condition 4 ╲────►  N
  │  center   │            │        ╲            ╱        │
  │ rightward │            │         ╲          ╱         │
  └───────────┘            ▼                               ▼
                    ┌───────────┐                   ┌──────────────┐
                    │ Adjust the│                   │ No adjustment│
                    │  center   │                   └──────────────┘
                    │  leftward │
                    └───────────┘
```

**FIG. 4**

```
                    ┌─────────┐
                    │  Start  │
                    └────┬────┘
                         │
                         ▼
                  ╱──────────╲
          Y      ╱  Satisfy a  ╲      N
      ┌─────────◄   condition 5  ►─────────┐
      │          ╲             ╱            │
      │           ╲───────────╱             │
      ▼                                     ▼
┌──────────┐                         ╱──────────╲
│Adjust the│                  Y     ╱  Satisfy a  ╲     N
│  center  │              ┌────────◄   condition 6  ►────────┐
│ rightward│              │         ╲             ╱          │
└──────────┘              │          ╲───────────╱           │
                          ▼                                  ▼
                    ┌──────────┐                      ┌─────────────┐
                    │Adjust the│                      │No adjustment│
                    │  center  │                      └─────────────┘
                    │ leftward │
                    └──────────┘
```

# FIG. 5

```
                         ┌─────────┐
                         │  Start  │
                         └────┬────┘
                              │
                              ▼
                       ╱──────────╲
                Y     ╱  Satisfy a  ╲    N
            ┌────────◄  condition 7  ►────────┐
            │         ╲             ╱         │
            ▼          ╲───────────╱          ▼
      ╱──────────╲                      ╱──────────╲
Y    ╱  Satisfy a  ╲   N           N   ╱  Satisfy a  ╲   Y
┌───◄  condition 9  ►───┐        ┌────◄  condition 8  ►────┐
│    ╲             ╱    │        │     ╲             ╱     │
│     ╲───────────╱     │        │      ╲───────────╱      │
│                       ▼        ▼                         ▼
│                ┌──────────┐  ┌──────────┐         ╱──────────╲
│                │Adjust the│  │    No    │   N    ╱  Satisfy a  ╲
└───────────────►│  center  │  │adjustment│◄──────◄  condition 10 ►
                 │ rightward│  └──────────┘        ╲             ╱
                 └──────────┘                       ╲───────────╱
                                                          │Y
                                                          ▼
                                                    ┌──────────┐
                                                    │Adjust the│
                                                    │  center  │
                                                    │ leftward │
                                                    └──────────┘
```

# FIG. 6

28

Acquisition module — 500

Energy proportionality calculation module — 600

Comparison module — 700

Adjustment module — 800

# FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YECAI GUO et al.** Moving equalizer taps based constant modulus blind equalization algorithm. *ICSP 2006,* 01 January 2006